Europäisches Patentamt

European Patent Office

Office européen des brevets

(19)

(11) **EP 1 418 521 A1**

(12) # EUROPEAN PATENT APPLICATION

(43) Date of publication:
**12.05.2004 Bulletin 2004/20**

(51) Int Cl.$^7$: **G06F 19/00**

(21) Application number: **03023267.2**

(22) Date of filing: **14.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **17.10.2002 JP 2002303284**

(71) Applicant: **Fuji Photo Film Co., Ltd.
Kanagawa-ken (JP)**

(72) Inventors:
• **Takeo, Hideya, c/o Fuji Photo Film Co., Ltd.
  Ashigarakami-gun Kanagawa-ken (JP)**
• **Imamura, Takashi, c/o Fujifilm Software Co., Ltd.
  Kawasaki-shi Kanagawa-ken (JP)**

(74) Representative: **Klunker . Schmitt-Nilson . Hirsch
Winzererstrasse 106
80797 München (DE)**

(54) **Abnormal pattern candidate detection processing method and system**

(57)    A calculation is made to find a degree of certainty about malignancy, which degree represents a level of possibility of a pattern being a malignant pattern, with respect to an abnormal pattern candidate having been detected in accordance with a medical image signal representing a medical image. The calculation is made in accordance with an index value representing a feature of the abnormal pattern candidate and in accordance with a correlation between the index value and possibility of a pattern being a malignant pattern, which correlation has been obtained from clinical results. Information representing the degree of certainty about malignancy with respect to the abnormal pattern candidate is outputted together with the information for specifying the detected abnormal pattern candidate.

**Description**

BACKGROUND OF THE INVENTION

Field of the Invention

This invention relates to an abnormal pattern candidate detection processing method and system. This invention particularly relates to an improvement in information outputted by image output means constituting the abnormal pattern candidate detection processing system.

Description of the Related Art

In medical fields, various kinds of image forming modalities (i.e., image input apparatuses), such as computed tomography (CT) scanners, magnetic resonance imaging (MRI) apparatuses, and computed radiography (CR) apparatuses, have become popular as apparatuses for forming images to be used in making a diagnosis. Also, abnormal pattern candidate detection processing systems (computer aided medical image diagnosing systems) have heretofore been proposed, wherein a candidate for an abnormal pattern embedded in an image of an object represented by an image signal, which has been acquired with one of the image forming modalities, is detected automatically by the utilization of a computer and from the image signal. The abnormal pattern candidate detection processing systems are described in, for example, Patent Literature 1.

The proposed abnormal pattern candidate detection processing systems primarily aim at detecting an abnormal pattern (i.e., a tumor pattern, a microcalcification pattern, or the like), which suggests the presence of breast cancer, or the like, from a mamma image. As abnormal pattern candidate detecting means for automatically performing processing for detecting an abnormal pattern candidate, the abnormal pattern candidate detection processing systems are provided with abnormal pattern candidate detecting means utilizing an iris filter, wherein image density gradients (or luminance gradients) in an image are represented by image density gradient vectors, and an image area, which is associated with a high degree of convergence of the image density gradient vectors, is detected as an abnormal pattern candidate. Alternatively, the abnormal pattern candidate detection processing systems are provided with abnormal pattern candidate detecting means utilizing a morphological filter, wherein a multi-structure element in accordance with the size of an abnormal pattern to be detected is utilized, and an image area, at which the image density changes in a range spatially narrower than the multi-structure element, is detected as an abnormal pattern candidate.

With the abnormal pattern candidate detecting means utilizing the iris filter, a candidate for a tumor pattern (a form of the abnormal pattern), which is a form of breast cancer, or the like, is capable of being detected automatically. With the abnormal pattern candidate detecting means utilizing the morphological filter, a candidate for a microcalcification pattern (a form of the abnormal pattern), which is a different form of breast cancer, or the like, is capable of being detected automatically.

In the abnormal pattern candidate detection processing systems, when an image signal representing an image (i.e., an original image, such as a mamma image) to be subjected to abnormal pattern candidate detection processing, is received, the abnormal pattern candidate detecting means described above detects an abnormal pattern candidate, and region-of-interest setting means sets a local area limited region, which contains the detected abnormal pattern candidate and a neighboring region, as a region of interest (hereinbelow referred to as the ROI) . Also, local area limited image processing means performs specified image processing, such as enhancement processing in accordance with an attribute of the detected abnormal pattern candidate (i.e., whether the detected abnormal pattern candidate is a tumor pattern or a microcalcification pattern) , on the ROI image. Further, entire area image processing means performs predetermined image processing on an entire area image representing the original image, such that a visible image may be obtained, which has good image quality and is capable of serving as an effective tool in, particularly, the efficient and accurate diagnosis of an illness. Furthermore, layout image forming means forms a single layout image from the entire area image, which has been obtained from the predetermined image processing, and the ROI image, which has been obtained from the specified image processing, and in accordance with a layout having been set previously. An image signal (hereinbelow referred to as the layout image signal) representing the layout image is fed into image display means, such as a cathode ray tube (CRT) display device, or image printing means, such as a laser printer (LP).

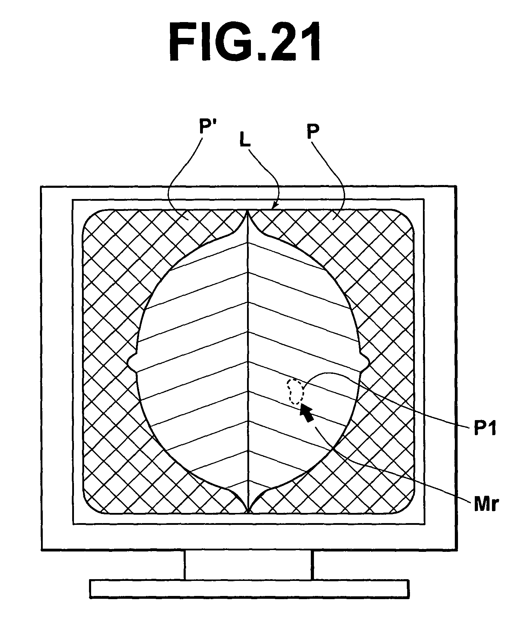

Figure 21 is an explanatory view showing an example of outputting from an abnormal pattern candidate detection processing system to a CRT display device. Specifically, in the cases of the mammography, for example, as illustrated in Figure 21, an image P of the right mamma of a patient and an arrow mark Mr, which indicates an abnormal pattern candidate P1 having been detected, may be superposed each other and displayed on the right half of a display screen of the CRT display device. Also, an image P' of the left mamma of the patient, fromwhichno abnormal patternhas beendetected, maybe displayed on the left half of the display screen. A layout image L, which has been laid out in this manner, is outputted to the CRT display device.

As described above, with the abnormal pattern candidate detection processing systems, the features, primarily shape or form features, and the like, of the abnormal pattern are finally expressed numerically, and the detection processing level for the abnormal pattern candidate is determined with statistical techniques by use of the features of the abnormal pattern. Also, the abnormal pattern candidate is detected in accordance with the thus determined detection processing level. In this manner, the abnormal pattern candidate is capable of being detected uniformly regardless of the level of diagnostic experience and the level of the diagnostic skill.

The pattern, which is detected by the abnormal pattern candidate detection processing systems, is the candidate for the abnormal pattern, and a person, such as a medical doctor, by himself finally makes a judgment as to whether the abnormal pattern candidate having been detected by the abnormal pattern candidate detection processing systems is or is not a true abnormal pattern. The person, such as the medical doctor, makes the judgment by viewing the image of the abnormal pattern candidate, which image is outputted by image displaying means, such as a CRT display device, or printing means. Therefore, it is desired that various kinds of information useful for making the final judgment be furnished to the person, who views the image of the abnormal pattern candidate.

Accordingly, the applicant proposed an abnormal pattern candidate detection processing system, wherein an index value, which concerns a judgment as to whether a pattern is to be or is not to be detected as an abnormal pattern candidate in abnormal pattern candidate detection processing, a value representing an allowance of detection with respect to an image signal, which has been detected as an image signal representing an abnormal pattern candidate, and the like, are displayed together with the image of the detected abnormal pattern candidate. The proposed abnormal pattern candidate detection processing system is described in Patent Literature 2 shown below.

Patent Literature 1:

U.S. Patent No. 5,761,334

Patent Literature 2:

Japanese Unexamined Patent Publication No. 2001-299740

However, the index value displayed by the proposed abnormal pattern candidate detection processing system is merely an index value regarded as being theoretically effective and is not an index value reflecting correlation between the index value and possibility of a pattern being a malignant pattern. Therefore, if the person, who views the image of the abnormal pattern candidate, does not know the correlation described above through experience, the person, who views the image of the abnormal pattern candidate, cannot utilize the displayed index value as the information useful for making a diagnosis. Also, in cases where the person, who views the image of the abnormal pattern candidate, knows the correlation described above, it is not always possible for the person, who views the image of the abnormal pattern candidate, to makes a judgment by intuition, from the displayed index value, as to possibility of a pattern being a malignant pattern.

SUMMARY OF THE INVENTION

The primary object of the present invention is to provide an abnormal pattern candidate detection processing method, wherein specific useful information is outputted, such that capability of an image of an abnormal pattern candidate serving as an effective tool in, particularly, efficient and accurate diagnosis of an illness may be enhanced even further.

Another obj ect of the present invention is to provide an abnormal pattern candidate detection processing system for carrying out the abnormal pattern candidate detection processing method.

The present invention provides a first abnormal pattern candidate detection processing method, comprising the steps of:

i) detecting an abnormal pattern candidate, which is embedded in a medical image, in accordance with a medical image signal representing a medical image, and
ii) outputting at least information for specifying the detected abnormal pattern candidate,

wherein the method further comprises the step of calculating a degree of certainty about malignancy, which degree represents a level of possibility of a pattern being a malignant pattern, with respect to the abnormal pattern candidate, the calculation being made in accordance with an index value representing a feature of the abnormal pattern candidate and in accordance with a correlation between the index value and possibility of a pattern being a malignant pattern, which correlation has been obtained from clinical results, and

the step of outputting at least the information for specifying the detected abnormal pattern candidate is a step of outputting information representing the degree of certainty about malignancy with respect to the abnormal pattern candidate together with the information for specifying the detected abnormal pattern candidate.

The present invention also provides a first abnormal pattern candidate detection processing system for carrying out the first abnormal pattern candidate detection processing method. Specifically, the present invention also provides a first abnormal pattern candidate detection processing system, comprising:

i) abnormal pattern candidate detecting means for detecting an abnormal pattern candidate, which is embedded in a medical image, in accordance with a medical image signal representing a medical image, and

ii) image output means for outputting at least information for specifying the detected abnormal pattern candidate,

wherein the system further comprises malignancy certainty degree calculating means for calculating a degree of certainty about malignancy, which degree represents a level of possibility of a pattern being a malignant pattern, with respect to the abnormal pattern candidate, the calculation being made in accordance with an index value representing a feature of the abnormal pattern candidate and in accordance with a correlation between the index value and possibility of a pattern being a malignant pattern, which correlation has been obtained from clinical results, and

the image output means outputs information representing the degree of certainty about malignancy with respect to the abnormal pattern candidate together with the information for specifying the detected abnormal pattern candidate.

The term "index value representing a feature of an abnormal pattern candidate" as used herein means at least one of various index values, which represent features of the detected abnormal pattern candidate. For example, the index value representing the feature of the abnormal pattern candidate may be at least one of index values, which represent the features of the abnormal pattern candidate, such as a shape, a size, a density, and a gray level pattern of the abnormal pattern candidate. However, the index value representing the feature of the abnormal pattern candidate may be any of index values, whose correlations with the possibility of a pattern being a malignant pattern are obtained ultimately.

Also, the degree of certainty about malignancy is calculated in accordance with the "actual correlation" between the index value, which represents the feature of the pattern within a certain image region, and the level of possibility of the pattern within the image region being a malignant pattern. The degree of certainty about malignancy is definitely different from an index value employed in conventional techniques, wherein the index value associated with a certain image region is "regarded" as being a factor reflecting the level of possibility that the image region will be a malignant pattern, and the index value is utilized directly as the "degree of malignancy."

The correlation between the index value and possibility of a pattern being a malignant pattern, which correlation has been obtained from clinical results, may be, for example, the relationship between the level of the index value having been obtained from an operation, wherein a calculation of the index value of each pattern is made with respect to each of a plurality of cases of diseases, and wherein it is actually confirmed with pathological examinations, and the like, whether the state associated with the pattern is a malignant state, a benign state, or a normal state, and a proportion associated with each level of the index value, which proportion is occupied by each of the malignant state, the benign state, and the normal state. In such cases, for example, the degree of certainty about malignancy may be calculated as the proportion associated with the level of the index value of the image region subjected to the calculation, which proportion is occupied by the malignant state. Specifically, in cases where the index value of the image region is 1, and the proportion associatedwith the index value of 1, which proportion is occupied by the malignant state, is 70%, the degree of certainty about malignancy may be taken as being 70 (%).

In the first abnormal pattern candidate detection processing method and system in accordance with the present invention, the index value may be an index value utilized for the detection of the abnormal pattern candidate.

In cases where the processing for detecting the abnormal pattern candidate is the processing for detecting a tumor pattern candidate, the index value utilized for the detection of the abnormal pattern candidate may be a degree of convergence of the tumor pattern, an output value of an iris filter, spreadness, elongation, roughness of periphery, circularity, entropy, or the like. In cases where the processing for detecting the abnormal pattern candidate is the processing for detecting a microcalcification pattern candidate, the index value utilized for the detection of the abnormal pattern candidate may be a density of microcalcificationpatterns, orthelike. Also, theindexvalue utilized for the detection of the abnormal pattern candidate may be a Mahalanobis distance, which reflects similarity of an image pattern with respect to a malignant pattern or a benign pattern, or a likelihood ratio of the Mahalanobis distance, which will be described later. Further, in cases where an image region, which is associated with the index value larger than a threshold value, is to be extracted as an abnormal pattern candidate, the index value utilized for the detection of the abnormal pattern candidate may be a degree of allowance, which represents the extent of allowance of the index value with respect to the threshold value. By way of example, the degree of allowance may be represented by $K/T$, $100 \times (K-T)/K$ (%), or $(K-T)$, where $K$ represents the index value, and $T$ represents the threshold value.

Also, the information for specifying the detected abnormal pattern candidate and the information representing the degree of certainty about malignancy with respect to the abnormal pattern candidate may be a mark, which is displayed at the position for the indication of the abnormal pattern candidate on the medical image, such that the kind of the mark may be altered in accordance with the degree of certainty about malignancy. The mark may be, for example, an "arrow mark" for indicating the abnormal pattern candidate, a "closed curve" or a "rectangular frame," which surrounds the abnormal pattern candidate, or a "number" displayed by the side of the abnormal pattern candidate. The color, the thickness of the line, the number of the lines, the figure of the number, or the like, may be altered in accordance with the degree of certainty about malignancy.

The present invention further provides a second abnormal pattern candidate detection processing method, comprising the steps of:

i) detecting an abnormal pattern candidate, which is embedded in a medical image, in accordance with a medical image signal representing a medical image, and
ii) outputting at least information for specifying the detected abnormal pattern candidate,

wherein the method further comprises the steps of:

a) selecting an arbitrary region in the medical image, and
b) calculating a degree of certainty about malignancy, which degree represents a level of possibility of a pattern being a malignant pattern, with respect to a pattern embedded in the selected region, the calculation being made in accordance with an index value representing a feature of the pattern embedded in the selected region and in accordance with a correlation between the index value and possibility of a pattern being a malignant pattern, which correlation has been obtained from clinical results, and

the step of outputting at least the information for specifying the detected abnormal pattern candidate is a step of further outputting information representing the degree of certainty about malignancy with respect to the pattern embedded in the selected region.

The present invention still further provides a second abnormal pattern candidate detection processing system for carrying out the second abnormal pattern candidate detection processing method. Specifically, the present invention still further provides a second abnormal pattern candidate detection processing system, comprising:

i) abnormal pattern candidate detecting means for detecting an abnormal pattern candidate, which is embedded in a medical image, in accordance with a medical image signal representing a medical image, and
ii) image output means for outputting at least information for specifying the detected abnormal pattern candidate,

wherein the system further comprises:

a) region selecting means for selecting an arbitrary region in the medical image, and
b) malignancy certainty degree calculating means for calculating a degree of certainty about malignancy, which degree represents a level of possibility of a pattern being a malignant pattern, with respect to a pattern embedded in the selected region, the calculationbeingmade in accordance with an index value representing a feature of thepattern embedded in the selected region and in accordance with a correlation between the index value and possibility of a pattern being a malignant pattern, which correlation has been obtained from clinical results, and

the image output means further outputs information representing the degree of certainty about malignancy with respect to the pattern embedded in the selected region.

In the first abnormal pattern candidate detection processing method and system in accordance with the present invention and the second abnormal pattern candidate detection processing method and system in accordance with the present invention, the information representing the degree of certainty about malignancy may be a numerical value. For example, as the information representing the degree of certainty about malignancy, the possibility of a pattern being a malignant pattern may be represented by numerical values ranging from 0 (%) to 100 (%).

Alternatively, the information representing the degree of certainty about malignancy may be a warning message, which is altered in accordance with the degree of certainty about malignancy. For example, in cases where the degree of certainty about malignancy with respect to the detected abnormal pattern candidate or the pattern embedded in the selected region is comparatively high, a warning message representing "HIGH MALIGNANCY" may be displayed in the vicinity of the pattern. Alternatively, in such cases, a warning message representing "THERE IS A HIGHLY MALIGNANT PATTERN" may be displayed at a position spaced from the pattern. In cases where the degree of certainty about malignancy with respect to the detected abnormal pattern candidate or the pattern embedded in the selected region is comparatively low, a message representing "LOWMALIGNANCY" maybe displayed in the vicinity of the pattern. Alternatively, in such cases, a message representing "THERE IS NOT A HIGHLY MALIGNANT PATTERN" maybe displayed at a position spaced from the pattern.

The present invention also provides a third abnormal pattern candidate detection processing method, comprising the steps of:

i) detecting an abnormal pattern candidate, which is embedded in a medical image, in accordance with a medical image signal representing a medical image, and
ii) outputting at least information for specifying the detected abnormal pattern candidate,

wherein the method further comprises the steps of:

a) calculating a degree of certainty about malignancy, which degree represents a level of possibility of a pattern being a malignant pattern, with respect to a predetermined region in the medical image, which predetermined region has been set for each of pixels in the medical image, as the degree of certainty about malignancy corresponding to each of the pixels in the medical image, the calculation being made in accordance with an index value representing a feature of a pattern embedded in the predetermined region and in accordance with a correlation between the index value and possibility of a pattern being a malignant pattern, which correlation has been obtained from clinical results, and
b) forming a distribution image signal representing a distribution image, which represents a distribution of the degrees of certainty about malignancy in the medical image, in accordance with the thus calculated degrees of certainty about malignancy, each of which degrees corresponds to one of the pixels, and

the step of outputting at least the information for specifying the detected abnormal pattern candidate is a step of further outputting the distribution image in accordance with the thus formed distribution image signal.

The present invention further provides a third abnormal pattern candidate detection processing system for carrying out the third abnormal pattern candidate detection processing method. Specifically, the present invention further provides a third abnormal pattern candidate detection processing system, comprising:

i) abnormal pattern candidate detecting means for detecting an abnormal pattern candidate, which is embedded in a medical image, in accordance with a medical image signal representing a medical image, and
ii) image output means for outputting at least information for specifying the detected abnormal pattern candidate, .

wherein the system further comprises:

a) malignancy certainty degree calculating means for calculating a degree of certainty about malignancy, which degree represents a level of possibility of a pattern beingamalignantpattern, withrespecttoapredeterminedregion in the medical image, which predetermined region has been set for each of pixels in the medical image, as the degree of certainty about malignancy corresponding to each of the pixels in the medical image, the calculation being made in accordance with an index value representing a feature of a pattern embedded in the predetermined region and in accordance with a correlation between the index value and possibility of a pattern being a malignant pattern, which correlation has been obtained from clinical results, and
b) distributionimagesignalforming meansfor forming a distribution image signal representing a distribution image, which represents a distribution of the degrees of certainty about malignancy in the medical image, in accordance with the thus calculated degrees of certainty about malignancy, each of which degrees corresponds to one of the pixels, and

the image output means further outputs the distribution image in accordance with the distribution image signal, which has been formed by the distribution image signal forming means.

In the third abnormal pattern candidate detection processing method and system in accordance with the present invention, the "predetermined region" in the medical image, which predetermined region has been set for each of the pixels in the medical image, may be, for example, a circular region having its center at one pixel of interest and having a radius of R. Also, in such cases, as for the index value representing the feature of the pattern embedded in the predetermined region in the medical image, which predetermined region has been set for each of the pixels in the medical image, an output value of an iris filter obtained with respect to the circular region acting as the predetermined region may be taken as the "index value" corresponding to the pixel of interest.

In the first abnormal pattern candidate detection processing method and system in accordance with the present invention, the second abnormal pattern candidate detection processing method and system in accordance with the present invention, and the third abnormal pattern candidate detection processing method and system in accordance with the present invention, the medical image may be a mammogram.

Also, as the image output means, image displaying means, such as a CRT display device or a liquid crystal monitor, or printing means, such as a laser printer, may be employed.

Further, the information for specifying the detected abnormal pattern candidate may be an image representing the abnormal pattern candidate. Alternatively, the information for specifying the detected abnormal pattern candidate may be numerical information, which represents the position, the shape, the size, or the like, of the abnormal pattern candidate. In cases where the image representing the abnormal pattern candidate is employed as the information for specifying the detected abnormal pattern candidate, the image representing the abnormal pattern candidate may be an image area of the abnormal pattern candidate itself (or an image area of the abnormal pattern candidate itself having been subjected to image processing, such as image size enlargement or reduction processing, processing in the frequency domain, or sharpness enhancement processing). Alternatively, in such cases, the image representing the abnormal pattern candidatemaybe amarker, such as an arrow mark, which indicates the abnormal pattern candidate in the entire area image, a rectangular or circular region-of-interest (ROI) frame, which surrounds the abnormal pattern candidate in the entire area image, or a contour frame, which extends along the contour of the abnormal pattern candidate in the entire area image.

Iris filtering processing, morphological filtering processing, and processing for calculating a likelihood ratio of a Mahalanobis distance will be described hereinbelow.

(Iris filtering processing)

The iris filtering processing is suitable for the detection of a tumor pattern candidate embedded in a radiation image.

It has been known that, for example, in a radiation image recorded on X-ray film (i.e., an image represented by an image signal of a high signal level for a high image density) , the image density values of a tumor pattern are ordinarily slightly smaller than the image densityvalues of the surrounding image areas. The image density values of the tumor pattern are distributed such that the image densityvalue becomes smaller from the periphery of an approximately circular tumor pattern toward the center point of the tumor pattern. Thus the distribution of the image density values of the tumor pattern has gradients of the image density values. Therefore, in the tumor pattern, the gradients of the image density values can be found in local areas, and the gradient lines (i.e., gradient vectors) converge in the directions heading toward the center point of the tumor pattern.

The iris filter calculates the gradients of image signal values, which are represented by the image density values, as gradient vectors and feeds out the information representing the degree of convergence of the gradient vectors. With the iris filtering processing. a tumor pattern is detected in accordance with the degree of convergence of the gradient vectors.

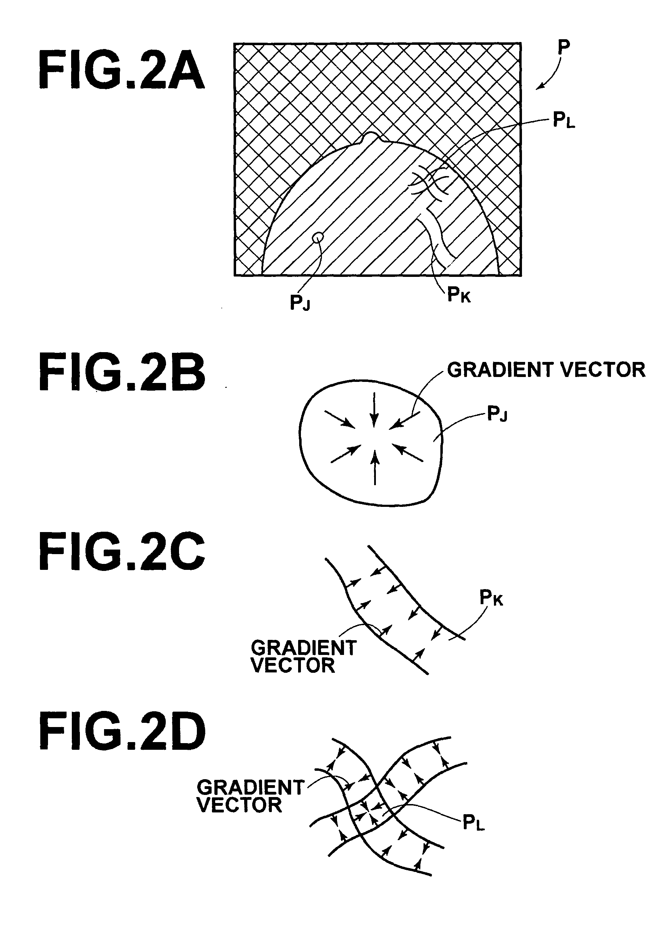

Specifically, by way of example, as illustrated in Figure 2A, a tumor pattern $P_J$ may be embedded in a mammogram P. As illustrated in Figure 2B, the gradient vector at an arbitrary pixel in the tumor pattern $P_J$ is directed to the vicinity of the center point of the tumor pattern $P_J$. On the other hand, as illustrated in Figure 2C, in an elongated pattern $P_K$, such as a blood vessel pattern or a mammary gland pattern, gradient vectors do not converge toward a specific point. Therefore, the distributions of the orientations of the gradient vectors in local areas may be evaluated, and a region, in which the gradient vectors converge toward a specific point, may be detected. The thus detected region may be taken as a tumor pattern candidate, which is considered as being a tumor pattern. As illustrated in Figure 2D, in a pattern $P_L$, in which elongated patterns, such as mammary gland patterns, intersect each other, gradient vectors are liable to converge toward a specific point. Therefore, the pattern $P_L$ may be detected falsely as an abnormal pattern candidate (a false positive (FP)).

The iris filtering processing is based on the fundamental concept described above. Steps of algorithms of the iris filtering processing will be described hereinbelow.

(Step 1) Calculation of gradient vectors

For each pixel j among all of the pixels constituting a given image, the orientation θ of the gradient vector of the image signal representing the image is calculated with Formula (1) shown below.

$$\theta = \tan^{-1} \frac{(f_3+f_4+f_5+f_6+f_7)-(f_{11}+f_{12}+f_{13}+f_{14}+f_{15})}{(f_1+f_2+f_3+f_{15}+f_{16})-(f_7+f_8+f_9+f_{10}+f_{11})}$$

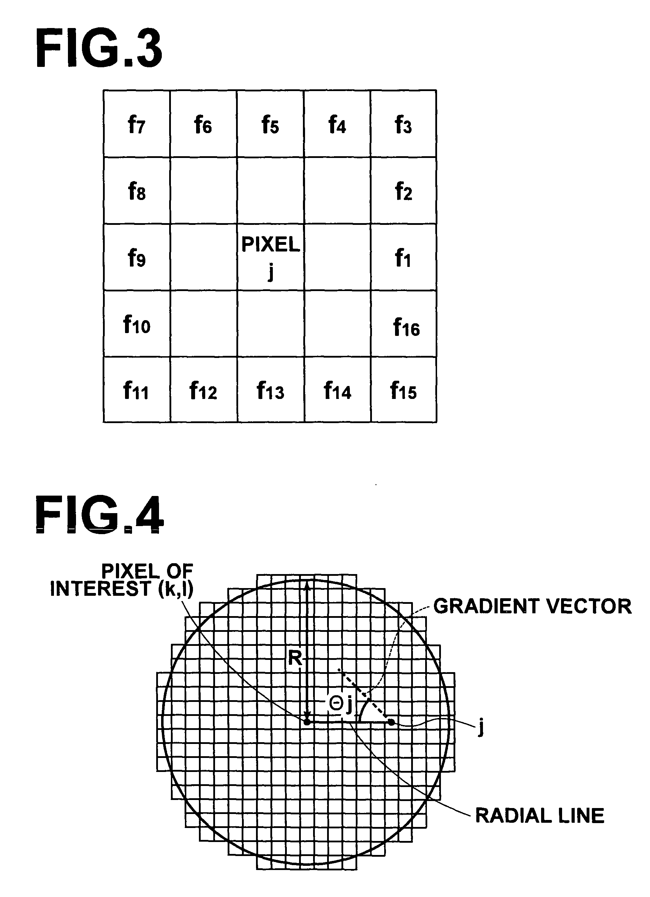

As illustrated in Figure 3, $f_1$ through $f_{16}$ in Formula (1) represent the pixel values (i.e., the image signal values) corresponding to the pixels located at the peripheral areas of a mask, which has a size of, for example, five pixels (located along the column direction of the pixel array) x five pixels (located along the row direction of the pixel array) and which has its center at the pixel j.

(Step 2) Calculation of the degree of convergence of gradient vectors

Thereafter, for each pixel among all of the pixels constituting the given image, the pixel is taken as a pixel of interest, and the degree of convergence C of the gradient vectors with respect to the pixel of interest is calculated with Formula (2) shown below.

$$C = (1/N)\sum_{j=1}^{N}\cos\theta_{j} \qquad\qquad (2)$$

As illustrated in Figure 4, in Formula (2), N represents the number of the pixels located in the region inside of a circle, which has its center at the pixel of interest and has a radius R, and $\theta_{j}$ represents the angle made between the straight line, which connects the pixel of interest and each pixel j located in the circle, and the gradient vector at the pixel j, which gradient vector has been calculated with Formula (1). Therefore, in cases where the orientations of the gradient vectors of the respective pixels j converge toward the pixel of interest, the degree of convergence C represented by Formula (2) takes a large value.

The gradient vector of each pixel j, which is located in the vicinity of a tumor pattern, is directed approximately to the center portion of the tumor pattern regardless of the level of the contrast of the tumor pattern. Therefore, it can be regarded that the pixel of interest associated with the degree of convergence C, which takes a large value, is the pixel located at the center portion of the tumor pattern. On the other hand, in a linear pattern, such as a blood vessel pattern, the orientations of the gradient vectors are biased to a certain orientation, and therefore the value of the degree of convergence C is small. Accordingly, a tumor pattern can be detected by taking each of all pixels, which constitute the image, as the pixel of interest, calculating the value of the degree of convergence C with respect to the pixel of interest, and rating whether the value of the degree of convergence C is or is not larger than a predetermined threshold value. Specifically, the processing with the iris filter has the features over an ordinary difference filter in that the processing with the iris filter is not apt to be adversely affected by blood vessel patterns, mammary gland patterns, or the like, and can efficiently detect tumor patterns.

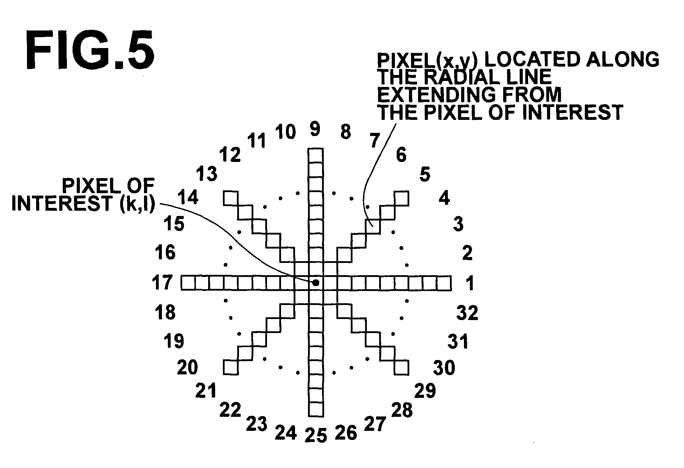

In actual processing, such that the detection performance unaffected by the sizes and shapes of tumor patterns may be achieved, it is contrived to adaptively change the size and the shape of the filter. Figure 5 shows an example of the filter. The filter is different from the filter shown in Figure 4. With the filter of Figure 5, the degree of convergence is rated only with the pixels, which are located along radial lines extending radially from a pixel of interest in M kinds of directions adjacent at $2\pi/M$ degree intervals. (In Figure 5, by way of example, 32 directions at 11.25 degree intervals are shown.)

In cases where the pixel of interest has the coordinates (k, l), the coordinates ([x], [y]) of the pixel, which is located along an i'th radial line and is the n'th pixel as counted from the pixel of interest, are given by Formulas (3) and (4) shown below.

$$x=k+n \cos \{2\pi(i-1)/M\} \qquad\qquad (3)$$

$$y=l+n \sin \{2\pi(i-1)/M\} \qquad\qquad (4)$$

wherein [x] represents the maximum integer, which does not exceed x, and [ y] represents the maximum integer, which does not exceed y.

Also, for each of the radial lines, the output value obtained for the pixels ranging from a certain pixel to a pixel, which is located along the radial line and at which the maximum degree of convergence is obtained, is taken as the degree of convergence $Ci_{max}$ with respect to the direction of the radial line. The mean value of the degrees of convergence $Ci_{max}$, which have been obtained for all of the radial lines, is then calculated. The mean value of the degrees of convergence $Ci_{max}$ having thus been calculated is taken as the degree of convergence C of the gradient vector group with respect to the pixel of interest.

Specifically, the degree of convergence Ci (n) , which is obtained for the pixels ranging from the pixel of interest to the n'th pixel located along the i'th radial line, is calculated with Formula (5) shown below.

$$Ci(n) = \sum_{l=1}^{n} \{(\cos\theta_{il})/n\}, \qquad R\min \le n \le R\max \qquad (5)$$

wherein Rmin and Rmax respectively represent the minimum value and the maximum value having been set for the radius of the tumor pattern, which is to be detected.

Specifically, with Formula (5), the degree of convergence Ci(n) is calculated with respect to all of the pixels, which are located along each of the radial lines and fall within the range from a starting point to an end point, the starting point being set at the pixel of interest, the end point being set at one of pixels that are located between a position at the length of distance corresponding to the minimum value Rmin having been set for the radius of the tumor pattern, which is to be detected, and a position at the length of distance corresponding to the maximum value Rmax.

Thereafter, the degree of convergence C of the gradient vector group is calculated with Formulas (6) and (7) shown below.

$$Ci_{max} = \max_{R\min \le n \le R\max} Ci(n) \qquad (6)$$

$$C = (1/32)\sum_{i=1}^{32} Ci_{max} \qquad (7)$$

The value of $Ci_{max}$ of Formula (6) represents the maximum value of the degree of convergence $Ci(n)$ obtained for each of the radial lines with Formula (5). Therefore, the region from the pixel of interest to the pixel associated with the degree of convergence $Ci(n)$, which takes the maximum value, may be considered as being the region of the tumor pattern candidate along the direction of the radial line.

The calculation with Formula (6) is made for all of the radial lines, and the contours (marginal points) of the regions of the tumor pattern candidate on all of the radial lines are thereby detected. The marginal points of the regions of the tumor pattern candidate on the adjacent radial lines are then connected by a straight line or a non-linear curve. In this manner, it is possible to specify the shape of the outer periphery of the region, which may be regarded as the tumor pattern candidate.

Thereafter, with Formula (7), the mean value of the maximum values $Ci_{max}$ of the degrees of convergence within the aforesaid regions, which maximum values $Ci_{max}$ have been given by Formula (6) for all directions of the radial lines, is calculated. In Formula (7), by way of example, the radial lines are set along 32 directions. The calculated mean value serves as an output value I of the iris filtering processing. The output value I is compared with a predetermined constant threshold value T1, which is appropriate for making a judgment as to whether the detected pattern is or is not a tumor pattern candidate. In cases where I≥T1 (or I>T1), it is judged that the region having its center at the pixel of interest is an abnormal pattern candidate (a tumor pattern candidate). In cases where I<T1 (or I≤T1), it is judged that the region having its center at the pixel of interest is not a tumor pattern candidate.

The calculation of the degree of convergence $Ci(n)$ may be carried out by using Formula (5') shown below in lieu of Formula (5).

$$Ci(n) = \frac{1}{n - R\min + 1}\sum_{l=R\min}^{n} \cos\theta_{il}, \qquad R\min \le n \le R\max \qquad (5')$$

Specifically, with Formula (5'), the degree of convergence Ci(n) is calculated with respect to all of the pixels, which are located along each of the radial lines and fall within the range from a starting point to an end point, the starting point being set at a pixel that is located at the length of distance corresponding to the minimum value Rmin having been set for the radius of the tumor pattern to be detected, which length of distance is taken from the pixel of interest, the end point being set at one of pixels that are located between the position at the length of distance corresponding to the minimum value Rmin and the position at the length of distance corresponding to the maximum value Rmax, which length of distance is taken from the pixel of interest.

The morphological operation processing is the technique for detecting a candidate for a microcalcification pattern, which is one of the characteristic forms of mammary cancers as in the cases of the tumor patterns. The morphological operation processing is performed by using a multi-scale λ and a structure element (i.e., a mask) B. The morphological operation processing has the features in that, for example, (1) itisefficientforextractingacalcificationpatternitself, (2) it is not affected by complicated background information, and (3) the extracted calcification pattern does not become distorted. Specifically, the morphological operation processing is advantageous over ordinary differentiation processing in that it can more accurately detect the geometrical information concerning the size, the shape, and the density distribution of the calcification pattern. The morphological operation processing is performed in the manner describedbelow.

(Fundamental morphological operation)

In general, the morphological operation processing is expanded as the theory of sets in an N-dimensional space. As an aid in facilitating the intuitive understanding, the morphological operation processing will be described hereinbelow with reference to a two-dimensional gray level image.

The gray level image is considered as a space, in which apoint having coordinates (x, y) has a height corresponding to an image density value f (x, y). In this case, it is assumed that the image signal representing the image density value f (x, y) is a high luminance-high signal level type of image signal, in which a low image density (i.e., a high luminance when the image is displayed on a CRT display device) is represented by a high image signal level.

Firstly, as an aid in facilitating the explanation, a one-dimensional function f(x) corresponding to the cross-section of the two-dimensional gray level image is considered. It is assumed that a structure element g used in the morphological operation processing is a symmetric function of Formula (8), which is symmetric with respect to the origin.

$$g^s(x)=g(-x) \tag{8}$$

It is also assumed that the value is 0 in a domain of definition G, which is represented by Formula (9).

$$G=\{-m, -m+1, ..., -1, 0, 1, ..., m-1, m\} \tag{9}$$

In such cases, the fundamental forms of the morphological operation are very simple operations performed with Formulas (10), (11), (12), and (13) shown below. Dilation:

$$[f \oplus G^s] (i)=\max\{f(i-m), ..., f(i), ..., f(i+m)\} \tag{10}$$

Erosion:

$$[f \cdot G^s] (i)=\min\{f (i-m), ..., f(i), ..., f(i+m)\} \tag{11}$$

Opening:

$$f_g= (f \cdot g^s) \oplus g \tag{12}$$

Closing:

$$f^g= (f \oplus g^s) \cdot g \tag{13}$$

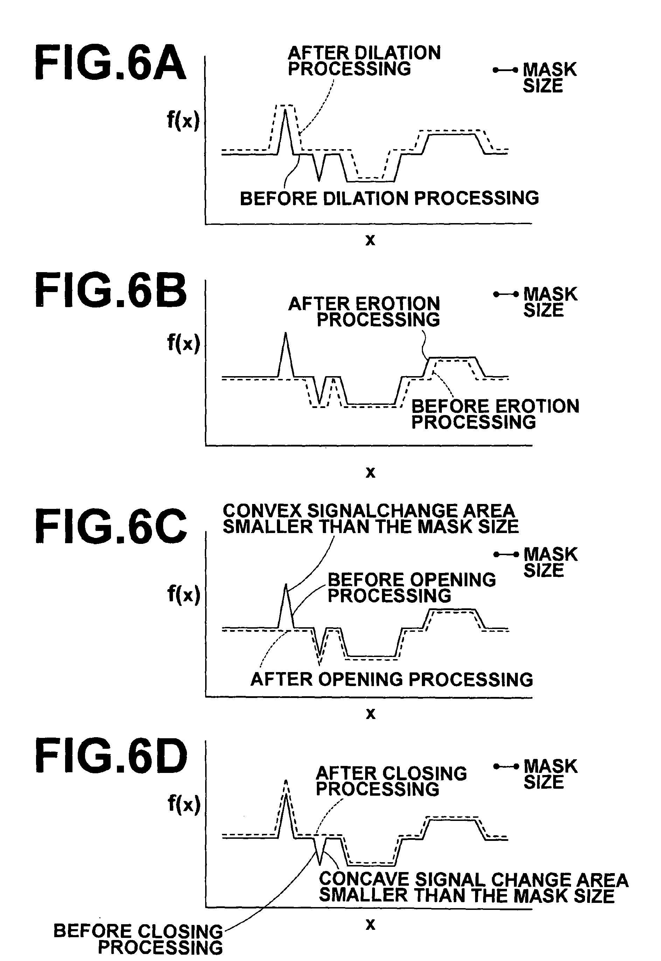

Specifically, as illustrated in Figure 6A, the dilation processing is the processing for retrieving the maximum value in a width of ±m (the value determined in accordance with a structure element B) having its center at a pixel of interest. As illustrated in Figure 6B, the erosion processing is the processing for retrieving the minimum value in the width of ±m having its center at the pixel of interest. The opening processing is equivalent to the searching of the maximum value after the searching of the minimum value. Also, the closing processing is equivalent to the searching of the minimum value after the searching of the maximum value. More specifically, as illustrated in Figure 6C, the opening processing is equivalent to the processing for smoothing the image density curve f (x) from the low luminance side, and removing a convex image density fluctuating area (i.e., the area at which the luminance is higher than that of the surrounding areas) , which fluctuates in a range spatially narrower than the mask size of 2m. Also, as illustrated in Figure 6D, the closing processing is equivalent to the processing for smoothing the image density curve f (x) from the high luminance side, and removing a concave image density fluctuating area (i.e., the area at which the luminance is lower than that of the surrounding areas), which fluctuates in the range spatially narrower than the mask size of 2m.

In cases where the image signal representing the image density value f(x) is a high image density-high signal level type of image signal, in which a high image density is represented by a high image signal level, the relationship between the image density value f (x) and the image signal value becomes reverse to the relationship between the image density value f (x) and the image signal value in the high luminance-high image signal level type of image signal . Therefore, the dilationprocessing, which is performed on the high image density-high signal level type of image signal, coincides with the erosion processing, which is performed on the high luminance-high signal level type of image signal as shown in Figure 6B. The erosion processing, which is performed on the high image density-high signal level type of image signal, coincides with the dilation processing, which is performed on the high luminance-high signal level type of image signal as shown in Figure 6A. The opening processing, which is performed on the high image density-high signal level type of image signal, coincides with the closing processing, which is performed on the high luminance-high signal level type of image signal as shown in Figure 6D. Also, the closing processing, which is performed on the high image density-high signal level type of image signal, coincides with the opening processing, which is performed on the high luminance-high signal level type of image signal as shown in Figure 6C.

The morphological operation processing is herein described with respect to the high luminance-high signal level type of image signal (i.e, the image signal representing the luminance value).

(Application to detection of calcification patterns)

In order for a calcification pattern to be detected, it is considered to employ a difference method, in which a smoothed image signal is subtracted from the original image signal. However, with a simple smoothing method, it is difficult to discriminate the calcification pattern from an elongated non-calcification pattern (for example, a pattern of the mammary gland, a blood vessel, mammary gland supporting tissues, or the like). Therefore, Kobatake, et al. have proposed morphological operation processing, which is represented by Formula (14) shown below and is based upon the opening operation using a multi-structure element. [Reference should be made to "Extraction of Microcalcifications Using Morphological Filter with Multiple Structuring Elements," Transactions of The Institute of Electronics, Information, and Communication Engineers of Japan, D-II, Vol. J75-D-II, No. 7, pp. 1170-1176, July 1992; and "Fundamentals of Morphology and Its Application to Mammogram Processing," Medical Imaging Technology, Vol. 12, No. 1, January 1994.]

$$P = f - \max_{i \in (1, ..., M)} \{(f \cdot Bi) \oplus Bi\}$$
$$= f - \max_{i \in (1, ..., M)} \{f_{Bi}\} \qquad (14)$$

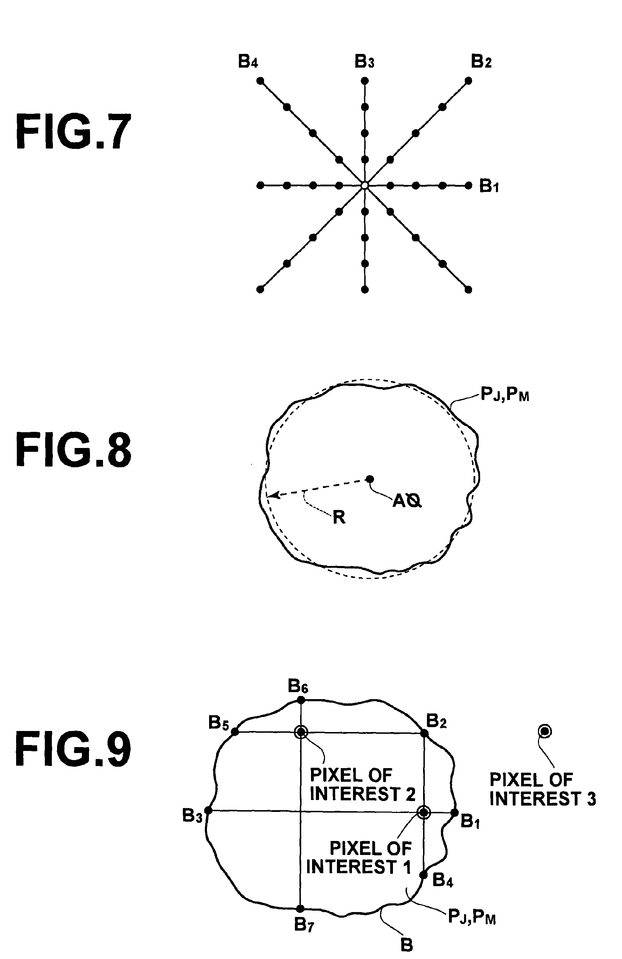

In Formula (14), Bi (wherein i=1, 2, ..., M) represents, for example, four linear structure elements B (in this case, M=4) shown in Figure 7. (The four structure elements, as a whole, will hereinbelow be referred to as the multi-structure element.) In cases where the structure element B is set to be larger than the calcification pattern to be detected, a calcification pattern, which is a convex signal change area finer than the structure element B (i.e., which is an image area fluctuating in a spatially narrow range), is removed in the opening processing. On the other hand, an elongated non-calcification pattern is longer than the structure element B. Therefore, in cases where the inclination of the non-calcification pattern (i.e, the direction along which the non-calcification pattern extends) coincides with one of the directions of the four structure elements Bi, the non-calcification pattern remains unremoved after the opening processing, i.e. the operation of the second term of Formula (14), has been performed. Therefore, in cases where the smoothed image signal obtained from the opening processing (i.e. the signal representing the image, fromwhich the calcification pattern has been removed) is subtracted from the original image signal f, an image is capable of being obtained which contains only the microcalcification pattern candidate. This is the concept behind Formula (14).

As described above, in cases where the image signal is of the high image density-high signal level type, the image density value of the calcification pattern is smaller than the image density values of the surrounding image areas, and the calcification pattern constitutes a concave signal change area with respect to the surrounding areas. Therefore, the closing processing is applied in lieu of the opening processing, and Formula (15) shown below is applied in lieu of

Formula (14).

$$P = f - \min_{i \in (1, \ldots, M)} \{(f \oplus Bi) \cdot Bi\}$$
$$= f - \min_{i \in (1, \ldots, M)} \{f_{Bi}\} \tag{15}$$

However, it often occurs that a non-calcification pattern having the same size as the size of the calcification pattern remains in the obtained image. In such cases, the signal, which represents the non-calcification pattern and is contained in P of Formula (14), is removed by utilizing the differentiation information based upon the morphological operation performed with Formula (16) shown below.

$$M_{grad} = (1/2) \times \{f \oplus \lambda B - f \cdot \lambda B\} \tag{16}$$

A large value of $M_{grad}$ indicates a high possibility of being a calcification pattern. Therefore, a calcification pattern candidate Cs is capable of being detected with Formula (17) shown below.

If $P(i, j) \geq T1$ and $M_{grad}(i, j) \geq T2$

then $Cs(i, j) = P$ else $Cs(i, j) = 0$ (17)

In Formula (17), T1 and T2 represent the predetermined threshold values, which are capable of being determined experimentally.
However, a non-calcification pattern, which has a size different from the size of the calcification pattern, can be removed by only the comparison of P of Formula (14) and the predetermined threshold value T1. Therefore, in cases where there is no risk that a non-calcification pattern having the same size as the size of the calcification pattern remains, it is sufficient for the condition of the first term of Formula (17), i.e. the condition of $P(i, j) \geq T1$, to be satisfied.
Finally, the cluster Cc of the calcification pattern is detected by the combination of the opening operation and the closing operation of the multi-scale in accordance with Formula (18) shown below.

$$Cc = Cs \oplus \lambda_1 B \cdot \lambda_3 B \oplus \lambda_2 B \tag{18}$$

In Formula (18), $\lambda_1$ and $\lambda_2$ are respectively determined by the maximum distance of the calcification pattern to be combined and the maximum radius of the isolated pattern to be removed, and $\lambda_3 = \lambda_1 + \lambda_2$.
As for the high luminance-high signal level type of image signal, the morphological operation processing is conducted in the manner described above. In cases where the image signal is of the high image density-high signal level type (in which a pixel of a high image density has a large digital signal value), the relationship between the opening operation and the closing operation is reversed.

(Processing for calculating the likelihood ratio of the Mahalanobis distance)

The Mahalanobis distance is one of distance scales, which are utilized for image pattern recognition. Similarity of an image pattern is capable of being found from the value of the Mahalanobis distance. With the processing utilizing the Mahalanobis distance, a plurality of feature measures representing the features of an image pattern are expressed by vectors, and the Mahalanobis distance is defined such that the differences in vectors between a reference image and an image subjected to the recognition may be reflected. Examples of the feature measures utilized for the calculation of the Mahalanobis distance include those described below.
A first feature measure is circularity Sp of a region (hereinbelow referred to the calculation object region) , which is subjected to the calculation of the Mahalanobis distance. The circularity Sp represents the feature of the contour shape of the calculation object region. As illustrated in Figure 8, an area A of the calculation object region and a center of gravity AO on the calculation object region are calculated, and a virtual circle is set. The virtual circle has an area approximately equal to the area A of the calculation object region, has its center at the position at which the center of gravity AO is located, andhas a radius R. Further, anoccupation ratio of the calculation object region, which is containedwithin the virtual circle, with respect to the area A is calculated as the circularity Sp. Specifically, the circularity Sp is calculated with Formula (19) shown below.

$$Sp=A'/\pi R^2 \tag{19}$$

wherein A' represents the area of the overlapping region, at which the virtual circle and the calculation object region overlaps one upon the other.

Also, as the feature measures of the interior of the calculation obj ect region, the three feature measures described below are calculated. Specifically, a histogram of image density values S of the calculation object region is formed. The frequency of occurrence of each of the image density values S is represented by P(S). In accordance with the distribution of the frequencies of occurrence P (S) with respect to the image density values S, a second feature measure, which represents the variance, var, is calculated with Formula (20). Also, a third feature measure, which represents the contrast, con, is calculatedwith Formula (21). Further, a fourth featuremeasure, which represents the angular moment, asm, is calculated with Formula (22).

$$\mathrm{var} = \sum^{N}\{(S-\bar{S})^2 \cdot P(S)\} \tag{20}$$

$$con = \sum^{N}\{S^2 \cdot P(S)\} \tag{21}$$

$$asm = \sum^{N}\{P(S)\}^2 \tag{22}$$

wherein $\bar{S}$ represents the mean value of the image density values S within the region, andN represents the number of pixels falling within the region.

Further, as the feature measures of the periphery of the calculation object region, five feature measures described below are calculated in accordance with an iris filter edge image (IFED image). How the five feature measures are calculated will be described hereinbelow.

With respect to the candidate region, i.e. the tumor pattern $P_J$ representing a breast cancer in the radiation image or a false abnormal pattern $P_M$, which has been detected with the iris filtering processing, an image area containing the detected region and the neighboring region is detected as, for example, a square region. Also, as for the thus detected square region, a peripheral edge image (the IFED image) is formed by the utilization of the iris filtering processing.

Specifically, with the iris filtering processing, the position of the point, which gives the maximum value of the degree of convergence Ci (n) on the i'th radial line extending radially from the pixel of interest, the maximum value being calculated with Formula (6), is detected. In this processing, no limitation is imposed upon the value of n giving the maximum value of the degree of convergence Ci(n).

As a result, in cases where the pixel of interest is located within the candidate region $P_J$ or $P_M$, the value of n giving the maximum value of Formula (6) indicates the pixel, at which the i'th radial line intersects with the periphery B of the candidate region $P_J$ or $P_M$. For example, as illustrated in Figure 9, as for a pixel of interest 1, the value of n indicates pixels $B_1$, $B_2$, $B_3$, and $B_4$. As for a pixel of interest 2 shown in Figure 9, the value of n indicates pixels $B_2$, $B_5$, $B_6$, and $B_7$.

In cases where the pixel of interest is located in the region outward from the candidate region $P_J$ or $P_M$, when the value of n indicates the pixel of interest itself, the value of Formula (6) takes the maximum value. Specifically, as for a pixel of interest 3 shown in Figure 9, which is located in the region outward from the candidate region $P_J$ or $P_M$, the value of Formula (6) takes the maximum value when the value of n indicates the pixel of interest itself.

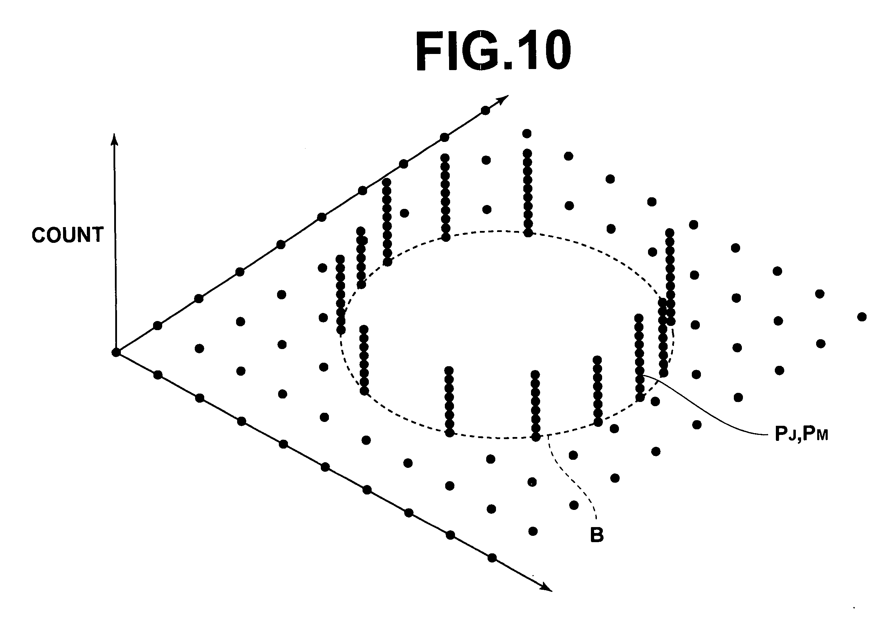

All of the pixels falling within the square region, which contains the candidate region, are successively taken as the pixel of interest, and the number of the pixels, which are associatedwith themaximumvalue of Formula (6), is counted. As a result, an image shown in Figure 10 is obtained.

Specifically, as for all of the pixels, which are located in the region outward from the candidate region $P_J$ or $P_M$, a count value of "1" is obtained. As for all of the pixels, which are located within the candidate region $P_J$ or $P_M$, a count value of "0" is obtained. Also, as for all of the pixels, which are located on the periphery B of the candidate region $P_J$ or $P_M$, count values larger than 1 are obtained. The image representing the count values is defined as the IFED image. In this manner, the IFED image is formed.

Thereafter, the processing described below is performedontheIFEDimage, andaco-occurrencematrixisformed.

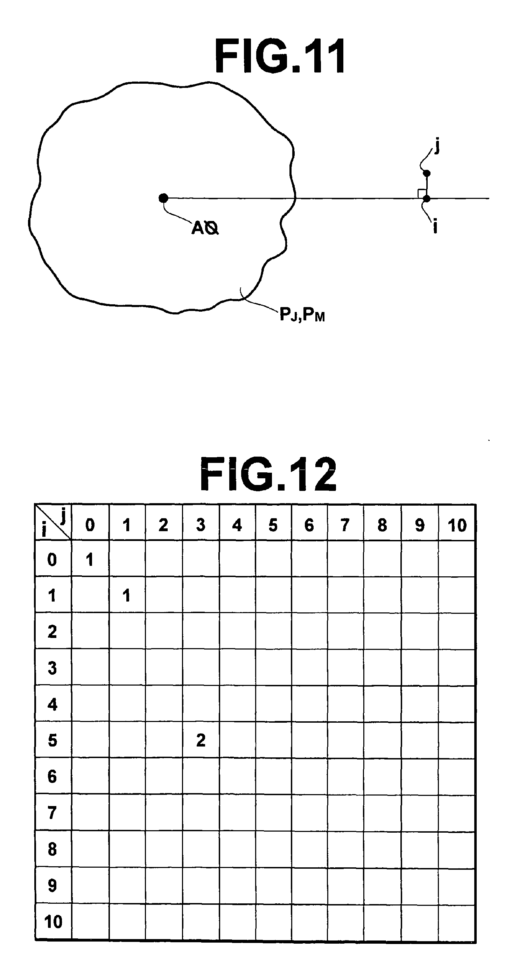

Specifically, as illustrated in Figure 11, the position, at which the center of gravity AO on the candidate region $P_J$ or $P_M$ is located, is found. A radial line is extended from the position, at which the center of gravity AO is located. An arbitrary point lying on the radial line is represented by i, and a point, which is spaced a distance equal to the sum of the lengths of two pixels from the point i along a line normal to the radial line, is represented by j.

The count value at the point i on the IFED image and the count value at the point j on the IFED image are counted up on a matrix shown in Figure 12 . Specifically, in cases where the point i is located in the region outward from the candidate region $P_J$ or $P_M$, the count value at the point i on the IFED image is "1." At this time, in cases where the point j is also located in the region outward from the candidate region $P_J$ or $P_M$, the count value at the point j on the IFED image is "1." In such cases, on the matrix shown in Figure 12, "1" is counted in the cell, which is located at the intersection of an i-row "1" and a j-column "1."

In cases where the point i is located within the candidate region $P_J$ or $P_M$, and the point j is also located within the candidate region $P_J$ or $P_M$, the count values at the points i and j on the IFED image are "0." In such cases, on the matrix shown in Figure 12, "1" is counted in the cell, which is located at the intersection of an i-row "0" and a j-column "0."

Also, in cases where the point i is located at the periphery B of the candidate region $P_J$ or $P_M$, and the point j is also located at the periphery B of the candidate region $P_J$ or $P_M$, the count value at the point i on the IFED image is, for example, "5," and the count value at the point j on the IFED image is, for example, "3." In such cases, on the matrix shown in Figure 12, "1" is counted in the cell, which is located at the intersection of an i-row "5" and a j-column "3." The count value, which is counted up on the matrix, is cumulated. Specifically, when the point i on the IFED image, at which the count value is "5," and the corresponding point j on the IFED image, at which the count value is "3," are found again, "1" is added to the previously counted value "1" in the cell, which is located at the intersection of the i-row "5" and the j-column "3," and therefore "2" is stored in the cell.

The point i is an arbitrary point on the IFED image. The radial lines are set such that all of the pixels of the IFED image may be taken as the point i, and the point i is searched along the respective radial lines. In this manner, the matrix is completed. The matrix of the IFED image is referred to as the co-occurrence matrix $P_g(x, y)$.

A tumor pattern has the characteristics of the shape of the tumor pattern such that the periphery of the tumor pattern has an approximately circular shape. Also, the points i and j are very close to each other. Therefore, in cases where the candidate region is the tumor pattern, there is a high level of probability that, when the point i is located at the periphery of the tumor pattern (i.e., when the count value at the point i on the IFED image is larger than 1), the point j will also be located at the periphery of the tumor pattern (i.e., the count value at the point j on the IFED image will be larger than 1).

On the other hand, in cases where the candidate region is the false abnormal pattern, as in the pattern at which two blood vessel patterns intersect each other, it is very rare that the false abnormal pattern will have a circular periphery. Therefore, even if the points i and j are close to each other, when the point i is located at the periphery of the false abnormal pattern, the point j will not necessarily be located at the periphery of the false abnormal pattern. In such cases, the probability that the point j will also be located at the periphery of the false abnormal pattern is markedly low.

Therefore, in accordance with whether the candidate region is the tumor pattern or the false abnormal pattern, significant differences are found in the characteristic values of the co-occurrence matrix $P_g (x, y)$. The characteristic values of the co-occurrence matrix are herein referred to as the edge information. The edge information is utilized as the feature measures. Specifically,asshown below,afifthfeature measure, which represents the variance, var, with respect to the co-occurrence matrix is calculated with Formula (23). Also, a sixth feature measure, which represents the difference entropy, dfe, with respect to the co-occurrence matrix is calculated with Formula (24). Further, a seventh feature measure, which represents the correlation, cor, with respect to the co-occurrence matrix is calculated with Formula (25). Furthermore, an eighth feature measure, which represents the inverse difference moment, idm, with respect to the co-occurrence matrix is calculated with Formula (26). Also, a ninth feature measure, which represents the sum entropy, se, with respect to the co-occurrence matrix is calculated with Formula (27).

$$\mathrm{var} = \sum_i \sum_j \{(i - \mu_x)^2 \cdot P_g(i, j)\} \qquad (23)$$

$$dfe = \sum_{k} \{P_{x-y}(k) \cdot \log|P_{x-y}(k)|\} \tag{24}$$

$$cor = \sum_{i} \sum_{j} [\{i \cdot j \cdot P_g(i, j) - \mu_x \cdot \mu_y\} / (\sigma_x \cdot \sigma_y)] \tag{25}$$

$$idm = \sum_{i} \sum_{j} [P_g(i, j) / \{1 + (i - j)^2\}] \tag{26}$$

$$se = -\sum_{k} [P_{x+y}(k) \cdot \log\{P_{x+y}(k)\}] \tag{27}$$

wherein

$$\mu_x = \sum_{i} \{i \cdot P_x(i)\}, \qquad \mu_y = \sum_{j} \{j \cdot P_y(j)\}$$

$$P_{x-y}(k) = \sum_{i} \sum_{j} P_g(i, j), \qquad k = |i - j|$$

$$P_{x+y}(k) = \sum_{i} \sum_{j} P_g(i, j), \qquad k = i + j$$

$$\sigma_x^2 = \sum_{i} (i - \mu_x)^2 \cdot P_x(i)$$

$$\sigma_y^2 = \sum_{j} (j - \mu_y)^2 \cdot P_y(j)$$

$P_x(i)$ represents the projection distribution along the j direction, i.e.,

$$P_x(i) = \sum_{i} P_g(i, j)$$

and $P_y(j)$ represents the projection distribution along the i direction, i.e.,

$$P_y(j) = \sum_{i} P_g(i, j)$$

In accordance with the thus obtained feature measures of the calculation object region, a Mahalanobis distance Dm1 from a pattern class (i=1), which represents a non-malignant pattern, and a Mahalanobis distance Dm2 from a pattern class (i=2), which represents a malignant pattern, are calculated with Formula (28) shown below.

$$Dmi = (\vec{x} - \vec{m}i)^t \sum_i{}^{-1} (\vec{x} - \vec{m}i) \qquad (28)$$

wherein $\Sigma_i$ represents the covariance matrix of the pattern class (pattern classification between the non-malignant pattern of i=1 and the malignant pattern of i=2) wi, i.e.,

$$\sum_i = (1/Ni) \sum_{x \in wi} (\vec{x} - \vec{m}i)(\vec{x} - \vec{m}i)^t$$

t represents the transposed vector (row vector), $\vec{x}$ represents the vector of the feature measure x, i.e.,

$$\vec{x} = (x1, x2, ... , xN)$$

$\Sigma_i^{-1}$ represents the inverse matrix of $\Sigma_i$, and $\vec{m}i$ represents the mean value of the pattern class wi, i.e.,

$$\vec{m}i = (1/Ni) \sum_{x \in wi} \vec{x}$$

The obtained feature measures correspond to x1 to xN described above and express an N-dimensional space with the form of (x1, x2, x3, ... , xN). The Mahalanobis distance between the pattern class of the calculation object region expressed on the N-dimensional pattern space and the pattern class of the non-malignant pattern is represented by Dm1. Also, the Mahalanobis distance between the pattern class of the calculation object region expressed on the N-dimensional pattern space and the pattern class of the malignant pattern is represented by Dm2.

Each of the pattern class of the non-malignant pattern and the pattern class of the malignant pattern represents the class of the pattern space, which has been set in accordance with the results of experiments carried out on a plurality of abnormal pattern candidates and is defined by the vector $\vec{x}$ with respect to each of the non-malignant pattern and the malignant pattern. For example, the pattern class of the non-malignant pattern is represented by the pattern class w1, which is formed with the mean value of the vector $\vec{x}$ with respect to the pattern regarded as being the non-malignant pattern. Also, the pattern class of the malignant pattern is represented by the pattern class w2, which is formed with the mean value of the vector $\vec{x}$ with respect to the pattern regarded as being the malignant pattern.

In cases where the calculation object region is the malignant pattern, the Mahalanobis distance with respect to the pattern class of the malignant pattern is apt to be short (i.e., Dm2 is apt to take a small value), and the Mahalanobis distance with respect to the pattern class of the non-malignant pattern is apt to exhibit a variation. Also, in cases where the calculation object region is the non-malignant pattern, the Mahalanobis distance with respect to the pattern class of the non-malignant pattern is apt to be short (i.e., Dm1 is apt to take a small value) , and theMahalanobis distance with respect to the pattern class of the malignant pattern is apt to exhibit avariation. Therefore, the likelihood ratio of the Mahalanobis distance, which likelihood ratio is effective for discriminating the malignant pattern and the non-malignant pattern fromeach other in accordance with the tendency described above, is calculated for each of calculation object regions.

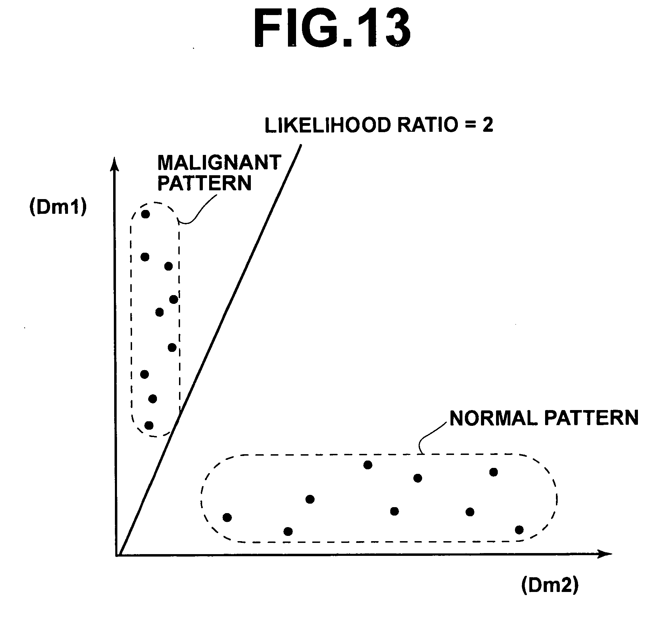

The likelihood ratio of the Mahalanobis distance is represented by Dm1/Dm2. The likelihood ratio represents the slope on a coordinate plane of Figure 13. Specifically, in cases where the likelihood ratio is high, it may be judged that there is a high possibility of the pattern being the malignant pattern. Also, in cases where the likelihood ratio is low, it may be judged that there is a high possibility of the pattern being the non-malignant pattern. Therefore, for example, the threshold value may be set at 2. Also, a judgment may be made such that a pattern associated with the likelihood ratio of at least 2 is to be detected as the abnormal pattern candidate, and a pattern associated with the likelihood ratio lower than 2 is not to be detected as the abnormal pattern candidate.

The iris filtering processing, the morphological filtering processing, and the processing for calculating the likelihood ratio of the Mahalanobis distance are performed in the manner described above.

With the first abnormal pattern candidate detection processing method and system in accordance with the present invention, the calculation is made to find the degree of certainty about malignancy, which degree represents the level of possibility of a pattern being a malignant pattern, with respect to the abnormal pattern candidate, which has been detected with the abnormal pattern candidate detection processing. The calculation is made in accordance with the index value representing the feature of the abnormal pattern candidate and in accordance with the correlation between the index value and possibility of a pattern being a malignant pattern, which correlation has been obtained from the clinical results. Also, the information representing the degree of certainty about malignancy with respect to the abnormal pattern candidate is outputted and displayed together with the medical image and the information for specifying the detected abnormal pattern candidate. Therefore, with the first abnormal pattern candidate detection processing method and system in accordance with the present invention, the specific information useful for diagnosis is capable of being furnished to the person, who viewsthedisplayed medicalimage. Accordingly, the capability of the outputted image serving as an effective tool in, particularly, the efficient and accurate diagnosis of an illness is capable of being enhanced even further.

With the first abnormal pattern candidate detection processing method and system in accordance with the present invention, wherein the index value is the index value utilized for the detection of the abnormal pattern candidate, higher significance with respect to the correlation between the index value and the possibility of a pattern being a malignant pattern is capable of being expected than the cases where an index value other than the index value utilized for the detection of the abnormal pattern candidate is employed. Therefore, the reliability of the calculated degree of certainty about malignancy is capable of being enhanced.

The first abnormal pattern candidate detection processing method and system in accordance with the present invention may be modified such that the information for specifying the detected abnormal pattern candidate and the information representing the degree of certainty about malignancy with respect to the abnormal pattern candidate are the mark, which is displayed at the position for the indication of the abnormal pattern candidate on the medical image, such that the kind of the mark may be altered in accordance with thedegree ofcertainty about malignancy. Withthemodification described above, both the information for specifying the detected abnormal pattern candidate and the information representing the degree of certainty about malignancy with respect to the abnormal pattern candidate are capable of being displayed intensively by the single mark. Therefore, the information for specifying the detected abnormal pattern candidate and the information representing the degree of certainty about malignancy with respect to the abnormal pattern candidate are capable of being recognized easily.

With the second abnormal pattern candidate detection processing method and system in accordance with the present invention, the medical image and the information for specifying the detected abnormal pattern candidate are outputted and displayed, and the information representing the degree of certainty about malignancy with respect to an arbitrary image region selected in the medical image is displayed in the vicinity of the selected image region. Therefore, besides the detected abnormal pattern candidate, the information representing the degree of certainty about malignancy with respect to the arbitrary image region is capable of beingdisplayedandutilized for comparison. Accordingly, the capability of the outputted image serving as an effective tool in, particularly, the efficient and accurate diagnosis of an illness is capable of being enhanced even further.

With the first abnormal pattern candidate detection processing method and system in accordance with the present invention and the second abnormal pattern candidate detection processing method and system in accordance with the present invention, wherein the information representing the degree of certainty about malignancy is the numerical value, recognition of a fine difference becomes possible, and comparison between the detected abnormal pattern candidate and the other candidates or a selected image region is capable of being made easily.

With the first abnormal pattern candidate detection processing method and system in accordance with the present invention and the second abnormal pattern candidate detection processing method and system in accordance with the present invention, wherein the information representing the degree of certainty about malignancy is the warning message, which is altered in accordance with the degree of certainty about malignancy, the directly understandable information is capable of being given to the person, who views the displayed medical image. Therefore, the state of the abnormal pattern candidate is capable of being understood easily.

With the third abnormal pattern candidate detection processing method and system in accordance with the present invention, the medical image and the information for specifying the detected abnormal pattern candidate are outputted and displayed, and the distribution image corresponding to the medical image, which distribution image represents the distribution of the degrees of certainty about malignancy, is displayed. Therefore, the state of distribution of the degrees of certainty about malignancy with respect to the entire pattern of the medical image is capable of being found. Accordingly, the width of the approach to diagnosis becomes broad, and the capability of the outputted image serving as an effective tool in, particularly, the efficient and accurate diagnosis of an illness is capable of being enhanced even further.

BRIEF DESCRIPTION OF THE DRAWINGS

Figure 1 is a block diagram showing a first embodiment of the abnormal pattern candidate detection processing system in accordance with the present invention,

Figure 2A is an explanatory view showing an example of a mammogram,

Figure 2B is an explanatory view showing the degree of convergence of gradient vectors in a tumor pattern,

Figure 2C is an explanatory view showing the degree of convergence of gradient vectors in an elongated pattern, such as a blood vessel pattern or a mammary gland pattern,

Figure 2D is an explanatory view showing the degree of convergence of gradient vectors in an area at which two elongated patterns, such as mammary gland patterns, intersect each other,

Figure 3 is an explanatory view showing a mask, which has its center at a pixel of interest j and has a size of 5 pixels (along a column direction) x 5 pixels (along a row direction),

Figure 4 is an explanatory view showing an angle made between a pixel of interest and a gradient vector at a pixel j,

Figure 5 is an explanatory view showing the concept behind an iris filter, which is set such that a contour shape may change adaptively,

Figure 6A is a graph showing how dilation processing, which is one of fundamental operations with a morphological filter, is performed,

Figure 6B is a graph showing how erosion processing, which is one of fundamental operations with a morphological filter, is performed,

Figure 6C is a graph showing how opening processing, which is one of fundamental operations with a morphological filter, is performed,

Figure 6D is a graph showing how closing processing, which is one of fundamental operations with a morphological filter, is performed,

Figure 7 is an explanatory view showing four linear structure elements employed in a morphological filter,

Figure 8 is an explanatory view showing a virtual circle having an area equivalent to an area A of a candidate region,

Figure 9 is an explanatory view showing how an iris filter edge (IFED) image is formed,

Figure 10 is an explanatory view showing an IFED image,

Figure 11 is an explanatory view showing how a co-occurrencematrix is formed in accordancewith the IFED image,

Figure 12 is an explanatory view showing a co-occurrence matrix,

Figure 13 is an explanatory graph showing how a judgment is made in accordance with a Mahalanobis distance,

Figure 14 is a graph showing a relationship between a likelihood ratio Y of a Mahalanobis distance and a proportion occupied by each of a malignant state, a benign state, and a normal state in an extracted candidate pattern, which relationship has been obtained from clinical results,

Figure 15 is a schematic view showing information outputted to a CRT display device in the first embodiment of the abnormal pattern candidate detection processing system in accordance with the present invention,

Figure 16 is a block diagram showing a second embodiment of the abnormal pattern candidate detection processing system in accordance with the present invention,

Figure 17 is a schematic view showing information outputted to a CRT display device in the second embodiment of the abnormal pattern candidate detection processing system in accordance with the present invention,

Figure 18 is ablockdiagramshowingathirdembodiment of the abnormal pattern candidate detection processing system in accordance with the present invention,

Figure 19 is a schematic view showing information outputted to a CRT display device in the third embodiment of the abnormal pattern candidate detection processing system in accordance with the present invention,

Figure 20 is a graph showing relationship between a threshold value of the likelihood ratio of the Mahalanobis distance at the time of detection of an abnormal pattern candidate and a malignant pattern detection rate, which relationship has been obtained from clinical results, and

Figure 21 is a schematic view showing an example of outputting to a CRT display device in the abnormal pattern candidate detection processing system.

## DESCRIPTION OF THE PREFERRED EMBODIMENTS

The present invention will hereinbelow be described in further detail with reference to the accompanying drawings.

Firstly, a first embodiment, which is an embodiment of the first abnormal pattern candidate detection processing system in accordance with the present invention, will be described hereinbelow.

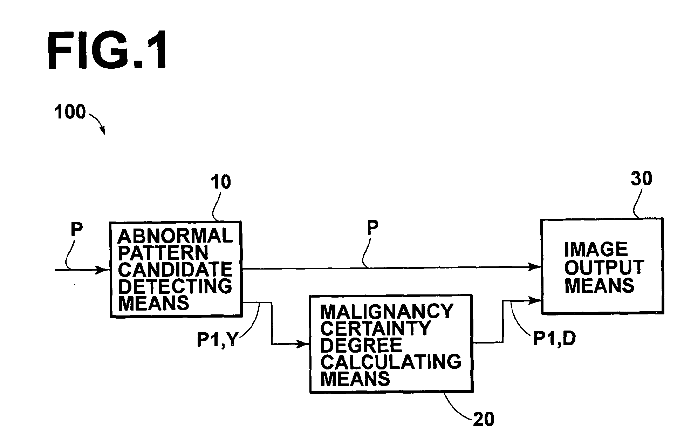

Figure 1 is a block diagram showing a first embodiment of the abnormal pattern candidate detection processing system in accordance with the present invention. With reference to Figure 1, an abnormal pattern candidate detection processing system 100 receives an image signal representing a mammogram (i.e., a medical image of the mamma) P of a patient and outputs an image signal representing the mammogram and other kinds of information to external image displaying means (such as a CRT display device). The abnormal pattern candidate detection processing system 100 comprises abnormal pattern candidate detecting means 10 for performing abnormal pattern candidate detection processing on the received image signal P, which represents the mammogram, and thereby detecting an abnormal pattern candidate P1 embedded in the image P, which is represented by the image signal P. (As an aid in facilitating the explanation, an image and an image signal representing the image are herein representedby the same reference letter.) The abnormal pattern candidate detection processing system 100 also comprises malignancy certainty degree calculating means 20 for calculating a degree of certainty about malignancy D, which degree represents a level of possibility of a pattern being a malignant pattern, with respect to the abnormal pattern candidate P1. The calculation of the degree of certainty about malignancy D is made in accordance with an index value representing a feature of the abnormal pattern candidate P1 and in accordance with a correlation between the index value and possibility of a pattern being a malignant pattern, which correlation has been obtained from clinical results. The abnormal pattern candidate detection processing system 100 further comprises image output means 30. As information for specifying the detected abnormal pattern candidate P1, the image output means 30 displays an arrow mark at a position for indication of the abnormal pattern candidate P1 in the image P. Also, the image output means 30 displays the calculated degree of certainty about malignancy D at a position in the vicinity of the abnormal pattern candidate P1.

The abnormal pattern candidate detecting means 10 stores an algorithm for abnormal pattern candidate detection processing utilizing an iris filter, wherein an image area, which is associated with a high degree of convergence of image density gradient vectors, is detected as a temporary candidate for an abnormal pattern (a tumor pattern). The abnormal pattern candidate detecting means 10 also stores an algorithm for abnormal pattern candidate detection processing utilizing a morphological filter, wherein an image area, at which the image density changes in a range spatially narrower than a multi-structure element, is detected as a temporary candidate for an abnormal pattern (a microcalcification pattern). The abnormal pattern candidate detecting means 10 detects the temporary candidates for the abnormal patterns by use of the corresponding algorithms. Also, the abnormal pattern candidate detecting means 10 stores an algorithm for calculating a Mahalanobis distance, which reflects similarity of an image pattern with respect to a malignant pattern or a benign pattern, in accordance with a plurality of feature measures, which represent features of a certain image region. With respect to the detected temporary candidate, the abnormal pattern candidate detecting means 10 calculates a likelihood ratio Y of the aforesaid Mahalanobis distance as one of index values. The abnormal pattern candidate detecting means 10 finally judges that a temporary candidate, which is associated with the likelihood ratio Y higher than a threshold value T2, is the abnormal pattern candidate P1 to be detected.

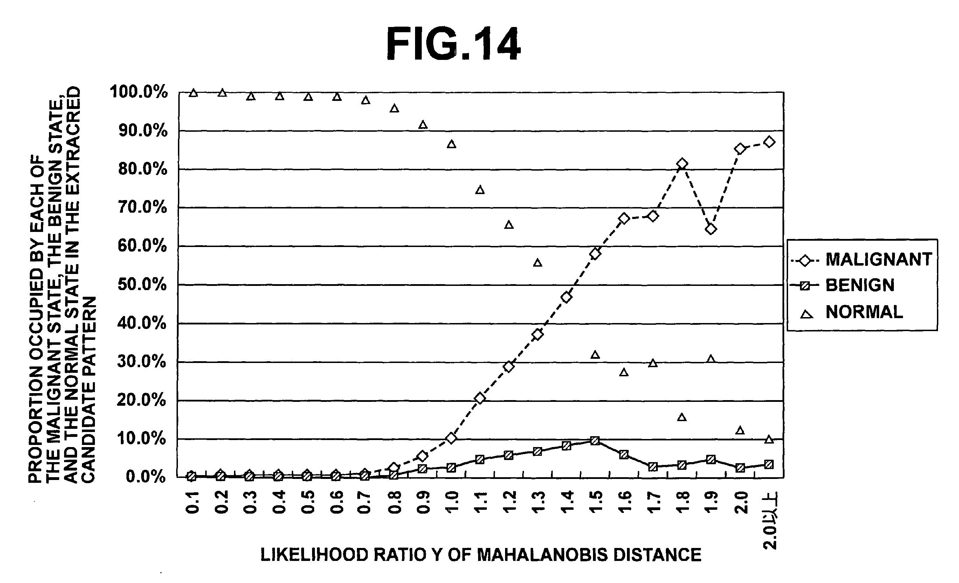

The malignancy certainty degree calculating means 20 calculates the degree of certainty about malignancy D with respect to the detected abnormal pattern candidate P1 in accordance with the likelihood ratio Y of the Mahalanobis distance with respect to the detected abnormal pattern candidate P1 and in accordance with the correlation between the likelihood ratio Y and the possibility of a pattern being a malignant pattern, which correlation has been obtained from the clinical results. In this embodiment, as the correlation between the likelihood ratio Y and the possibility of a pattern being a malignant pattern, which correlation has been obtained from the clinical results, the relationship described below is employed. Specifically, the likelihood ratio Y of the Mahalanobis distance of each pattern is calculated with respect to each of a plurality of cases of diseases. Also, it is actually confirmed with pathological examinations, and the like, whether the state of the pattern associated with each value of the likelihood ratio Y is a malignant state, a benign state, or a normal state. In this manner, as illustrated in Figure 14, the relationship between the value of the likelihood ratio Y of the Mahalanobis distance and the proportion associated with each value of the likelihood ratio Y, which proportion is occupied by each of the malignant state, the benign state, and the normal state, is obtained. The thus obtained relationship is employed as the correlation between the likelihood ratio Y and the possibility of a pattern being a malignant pattern, which correlation has been obtained from the clinical results. Also, in this embodiment, the degree of certainty about malignancy D is calculated as the proportion associated with the value of the likelihood ratio Y of the Mahalanobis distance with respect to the calculation object region subjected to the calculation, which proportion is occupied by the malignant state. Specifically, as illustrated in Figure 14, in cases where the likelihood ratio Y of the Mahalanobis distance of the calculation object region is 1.7, the proportion associated with the likelihood ratio Y of 1.7, which proportion is occupied by the malignant state, is 70%. Therefore, in such cases, the degree of certainty about malignancy D may be taken as being 70 (%).

How the first embodiment of the abnormal pattern candidate detection processing system in accordance with the present invention operates will be described hereinbelow.

Firstly, the image signal P representing the mammogram is fed from an external image forming modality, such as a computed tomography (CT) scanner or a computed radiography (CR) apparatus, into the abnormal pattern candidate detecting means 10 of the abnormal pattern candidate detection processing system 100, which is the first embodiment of the abnormal pattern candidate detection processing system in accordance with the present invention. The abnormal pattern candidate detecting means 10 performs the abnormal pattern candidate detection processing on the received image signal P. The abnormal pattern candidate detection processing is performed in accordance with the aforesaid abnormal pattern candidate detection processing algorithms (i.e., the algorithm for the abnormal pattern candidate detection processing utilizing the iris filter and the algorithm for the abnormal pattern candidate detection processingutilizingthemorphological filter). Inthismanner, the abnormal pattern candidate detecting means 10 calculates index values (such as the degree of convergence of gradient vectors, the output value I of the iris filter, and the density of the microcalcification pattern candidates) K with respect to each of areas and regions in the mammogram. Also, the abnormal pattern candidate detecting means 10 compares each of the index values K with a predetermined threshold value T, which corresponds to each of the index values K. In cases where each of the index values K is larger than the corresponding threshold value T, the pattern of the region associated with the index value K is taken as the temporary candidate. Further, the abnormal pattern candidate detecting means 10 performs discrimination processing on the temporary candidate and calculates the likelihood ratio Y of the Mahalanobis distance as one of index values with respect to each of temporary candidates. A temporary candidate, which is associated with the likelihood ratio Y higher than the predetermined threshold value T2, is extracted as the final abnormal pattern candidate P1. The abnormal pattern candidate detecting means 10 feeds information, which represents the position of the extracted abnormal pattern candidate P1, into the image output means 30.

The malignancy certainty degree calculating means 20 calculates the degree of certainty about malignancy D with respect to the extracted abnormal pattern candidate P1 in accordance with the likelihood ratio Y of the Mahalanobis distance, which likelihood ratio is one of the index values andhas been utilized for the detection of the extracted abnormal pattern candidate P1, and in accordance with the correlation between the likelihood ratio Y and the possibility of a pattern being a malignant pattern, which correlation has been obtained from the clinical results. In cases where a plurality of abnormal pattern candidates P1, P1, ... have been detected, a plurality of degrees of certainty about malignancy D, D, ... corresponding to the abnormal pattern candidates P1, P1, ... are calculated. The malignancy certainty degree calculating means 20 feeds the information, which represents the calculated degree of certainty about malignancy D, into the image output means 30.

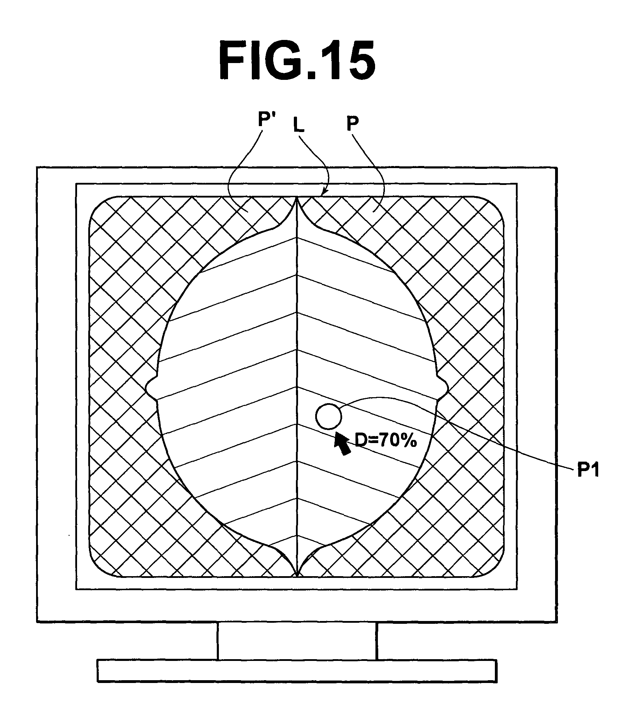

The image output means 30, into which the information representing the calculated degree of certainty about malignancy D is thus fed, has already received the image signal P and the information, which represents the position of the detected abnormal pattern candidate P1. As illustrated in Figure 15, in accordance with the received image signal P, the received information representing the position of the detected abnormal pattern candidate P1, and the received information representing the calculated degree of certainty about malignancy D, the image output means 30 displays the arrow mark, which indicates the abnormal pattern candidate P1 in the image P, on the display screen. Also, the image output means 30 displays the degree of certainty about malignancy D at a position in the vicinity of the arrow mark on the display screen.

In Figure 15, mammograms P and P' of a set of the right and left mammae are displayed simultaneously such that the mammograms P and P' stand back to back with each other. However, the image layout is not limited to the layout described above. For example, the mammograms P and P' of a set of the right and left mammae may be displayed alternately.

Also, besides the arrow mark indicating the abnormal pattern candidate P1, the mark for specifying the abnormal pattern candidate P1 may be a closed curve or a rectangular frame, which surrounds the abnormal pattern candidate P1, or a number displayed in the vicinity of the abnormal pattern candidate P1. Further, as the information representing the degree of certainty about malignancy D, the kind of the mark may be altered in accordance with the degree of certainty about malignancy D. For example, the color, the thickness of the line, the number of the lines, the figure of the number, or the like, may be altered in accordance with the degree of certainty about malignancy D.

As described above, with the abnormal pattern candidate detection processing system 100, which is the first embodiment of the abnormal pattern candidate detection processing system in accordance with the present invention, the malignancy certainty degree calculating means 20 makes the calculation for finding the degree of certainty about malignancy D, which degree represents the level of possibility of a pattern being a malignant pattern, with respect to the abnormal pattern candidate P1, which has been detected with the abnormal pattern candidate detection processing. The calculation is made in accordance with the likelihood ratio Y of the Mahalanobis distance, which likelihood ratio is one of the index values and concerns the judgment as to whether the candidate is to be or is not to be detected as the abnormal pattern candidate P1 in the abnormal pattern candidate detection processing, and in accordance with the correlation between the likelihood ratio Y and the possibility of a pattern being a malignant pattern, which correlation has been obtained from the clinical results. Also, the image output means 30 outputs and displays the information, which represents the calculated degree of certainty about malignancy D with respect to the abnormal pattern candidate P1, together with the image P and the information for specifying the detected abnormal pattern candidate P1. Therefore, with the abnormal pattern candidate detection processing system 100, the specific information useful for diagnosis is capable of being furnished to the person, who views the displayed medical image. Accordingly, the capability of the outputted image serving as an effective tool in, particularly, the efficient and accurate diagnosis of an illness is capable of being enhanced.

A second embodiment, which is an embodiment of the second abnormal pattern candidate detection processing system in accordance with the present invention, will be described hereinbelow.

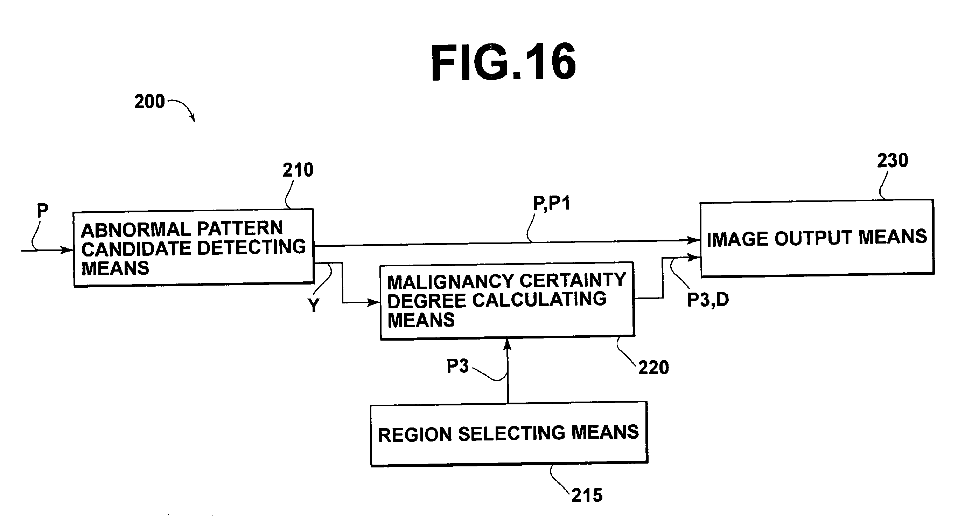

Figure 16 is a block diagram showing a second embodiment of the abnormal pattern candidate detection processing system in accordance with the present invention. With reference to Figure 16, an abnormal pattern candidate detection processing system 200 comprises abnormal pattern candidate detecting means 210 for performing the abnormal pattern candidate detection processing on the received image signal P, which represents the mammogram, and thereby detecting the abnormal pattern candidate P1 embedded in the image P, which is represented by the image signal P. The abnormal pattern candidate detection processingsystem200also comprises region selecting means 215 for selecting an arbitrary region in the image P. The abnormal pattern candidate detection processing system 200 further comprises malignancy certainty degree calculating means 220 for calculating the degree of certainty about malignancy D, which degree represents a level of possibility of a pattern being a malignant pattern, with respect to the pattern within a selected region P3. The calculation of the degree of certainty about malignancy D is made in accordance with an index value representing a feature of the pattern within the selected region P3 and in accordance with the correlation between the index value and the possibility of a pattern being a malignant pattern, which correlation has been obtained from the clinical results. The abnormal pattern candidate detection processing system 200 further comprises image output means 230. The image output means 230 displays an arrow mark at a position for indication of the detected abnormal pattern candidate P1 in the image P. Also, the image output means 230 displays the calculated degree of certainty about malignancy D at a position in the vicinity of the pattern within the selected region P3.

How the second embodiment of the abnormal pattern candidate detection processing system in accordance with the present invention operates will be described hereinbelow.

Firstly, the image signal P representing the mammogram is fed from an external image forming modality, such as a computed tomography (CT) scanner or a computed radiography (CR) apparatus, into the abnormal pattern candidate detecting means 210 of the abnormal pattern candidate detection processing system200, which is the second embodiment of the abnormal pattern candidate detection processing system in accordance with the present invention. In the same manner as that for the abnormal pattern candidate detecting means 10 in the first embodiment described above, the abnormal pattern candidate detecting means 210 performs the abnormal pattern candidate detection processing on the received image signal P. The abnormal pattern candidate detection processing is performed in accordance with the abnormal pattern candidate detection processing algorithms describedabove. Inthismanner, theabnormalpatterncandidate detecting means 210 extracts the abnormal pattern candidate P1. However, at this time, besides the calculation of the likelihood ratio Y of the Mahalanobis distance with respect to the temporary candidate, the abnormal pattern candidate detecting means 210 also makes the calculation of the likelihood ratio Y of the Mahalanobis distance with respect to every area and every region in the image P regardless of whether the area and the region are or are not the temporary candidates. The abnormal pattern candidate detecting means 210 stores the information representing the thus calculated likelihood ratios Y, Y, ... of the Mahalanobis distances. For example, the abnormal pattern candidate detecting means 210 calculates an index value K with respect to a predetermined region in the image P, which predetermined region has been set for each of pixels in the image P. The thus calculated index value K is taken as the index value K corresponding to each of the pixels in the image P. Also, the abnormal pattern candidate detecting means 210 calculates the likelihood ratio Y of the Mahalanobis distance, which likelihood ratio acts as an index value, from the index value K. The thus calculated likelihood ratio Y is taken as the likelihood ratio Y corresponding to each of the pixels in the image P. The abnormal pattern candidate detecting means 210 stores the information representing the calculated likelihood ratios Y, Y, ... Also, the abnormal pattern candidate detecting means 210 feeds the information, which represents the position of the extracted abnormal pattern candidate P1, into the image output means 230.

When an arbitrary region in the image P is selected with the region selecting means 215, the region selecting means 215 feeds the information, which represents the position of the selected region P3, into the malignancy certainty degree calculating means 220.

In accordance with the information representing the position of the selected region P3, the malignancy certainty degree calculating means 220 reads the information representing the likelihood ratio Y of the Mahalanobis distance, which likelihood ratio acts as the index value and corresponds to the selected region P3, from the abnormal pattern candidate detecting means 210. Also, the malignancy certainty degree calculating means 220 calculates the degree of certainty about malignancy D with respect to the selected region P3 in accordance with the likelihood ratio Y of the Mahalanobis distance, which likelihood ratio corresponds to the selected region P3, and in accordance with the correlation between the likelihood ratio Y and the possibility of a pattern being a malignant pattern, which correlation has been obtained from the clinical results. The malignancy certainty degree calculating means 220 feeds the information, which represents the position of the selected region P3, and the information, which represents the calculated degree of certainty about malignancy D, into the image output means 230. At this time, as the likelihood ratio Y of the Mahalanobis distance, which likelihood ratio corresponds to the selected region P3, for example, the mean value or the maximum value of the values of the likelihood ratios Y, Y, ... of the Mahalanobis distances, which likelihood ratio values correspond to all of the pixels lying within the selected region P3, may be employed.

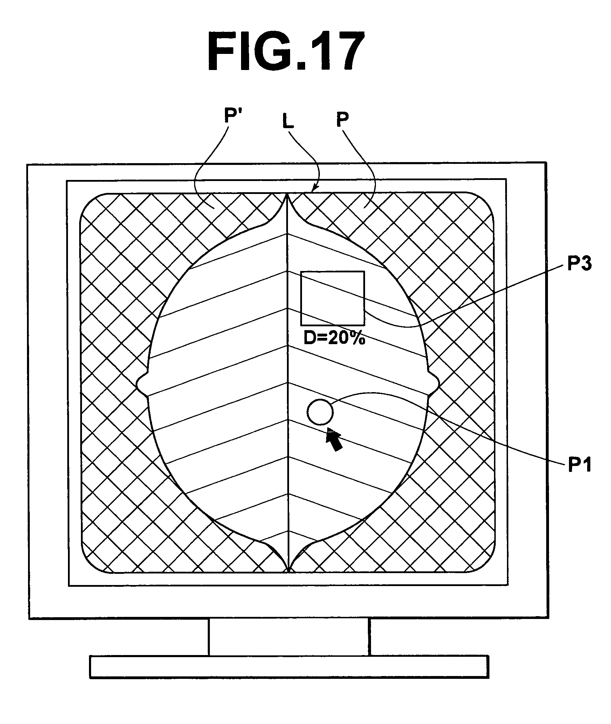

As illustrated in Figure 17, in accordance with the received image signal P, the received information representing the position of the detected abnormal pattern candidate P1, the received information representing the position of the selected region P3, and the received information representing the calculated degree of certainty about malignancy D with respect to the selected region P3, the image output means 230 displays the arrow mark, which indicates the abnormal pattern candidate P1 in the image P, on the display screen. Also, the image output means 230 displays the degree of certainty about malignancy D, which degree corresponds to the selected region P3, at a position in the vicinity of the selected region P3 on the display screen.

As described above, with the abnormal pattern candidate detection processing system 200, which is the second embodiment of the abnormal pattern candidate detection processing system in accordance with the present invention, the image output means 230 outputs and displays the image P and the information for specifying the detected abnormal pattern candidate P1. Also, the image output means 230 outputs and displays the information, which represents the degree of certainty about malignancy D with respect to the selected region P3, at the position in the vicinity of the selected region P3 in the image P. Therefore, besides the detected abnormal pattern candidate, the information representing the degree of certainty about malignancy with respect to an arbitrary image region is capable of being displayed and utilized for comparison. Accordingly, the capability of the outputted image serving as an effective tool in, particularly, the efficient and accurate diagnosis of an illness is capable of being enhancedeven further.

A third embodiment, which is an embodiment of the third abnormal pattern candidate detection processing system in accordance with the present invention, will be described hereinbelow.

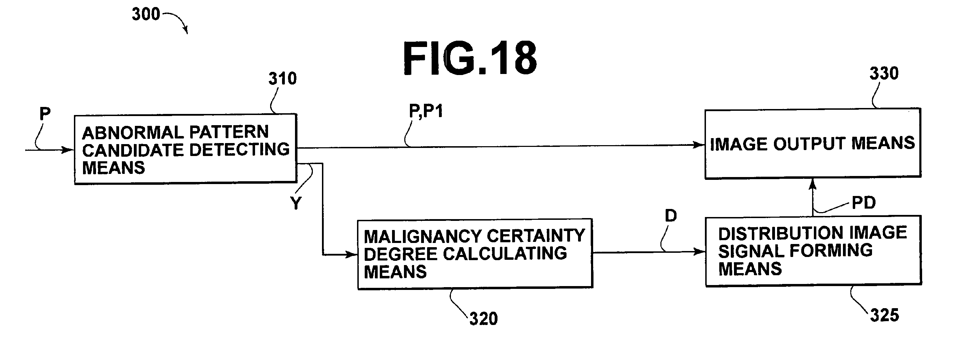

Figure 18 is a block diagram showing a third embodiment of the abnormal pattern candidate detection processing system in accordance with the present invention. With reference to Figure 18, an abnormal pattern candidate detection processing system 300 comprises abnormal pattern candidate detecting means 310 for performing the abnormal pattern candidate detection processing on the received image signal P, which represents the mammogram, and thereby detecting the abnormal pattern candidate P1 embedded in the image P, which is represented by the image signal P. The abnormal pattern candidate detection processing system 300 also comprises malignancy certainty degree calculating means 320 for calculating the degree of certainty about malignancy D with respect to a predetermined region in the medical image, which predetermined region has been set for each of the pixels in the image P, as the degree of certainty about malignancy D corresponding to each of the pixels in the image P. The calculation of the degree of certainty about malignancy D corresponding to each of the pixels in the image P is made in accordance with an index value representing a feature of a pattern embedded in the predetermined region and in accordance with the correlation between the index value and the possibility of a pattern being a malignant pattern, which correlation has been obtained from clinicalresults. The abnormal pattern candidate detection processing system 300 further comprises distribution image signal forming means 325 for forming a distribution image signal PD representing a distribution image PD, which represents a distribution of the degrees of certainty about malignancy D, D, ... in the image P, in accordance with the thus calculated degrees of certainty about malignancy D, D, ..., each of which degrees corresponds to one of the pixels. The abnormal pattern candidate detection processing system 300 still further comprises image outputmeans 330. The image output means 330 displays the image P and an arrow mark at a position for indication of the detected abnormal pattern candidate P1 in the image P. Also, the image output means 330 displays the distribution image PD, which represents the distribution of the degrees of certainty about malignancy D, D, ... in the image P.

How the third embodiment of the abnormal pattern candidate detection processing system in accordance with the present invention operates will be described hereinbelow.

Firstly, the image signal P representing the mammogram is fed from an external image forming modality, such as a computed tomography (CT) scanner or a computed radiography (CR) apparatus, into the abnormal pattern candidate detecting means 310 of the abnormal pattern candidate detection processing system 300, which is the third embodiment of the abnormal pattern candidate detection processing system in accordance with the present invention. In the same manner as that for the abnormal pattern candidate detecting means 10 in the first embodiment described above, the abnormal pattern candidate detecting means 310 performs the abnormal pattern candidate detection processing on the received image signal P. The abnormal pattern candidate detection processing is performed in accordance with the abnormal pattern candidate detection processing algorithms described above. Inthismanner,the abnormalpattern candidate detecting means 310 extracts the abnormal pattern candidate P1. However, at this time, the abnormal pattern candidate detecting means 310 calculates the index value K with respect to the predetermined region in the image P, which predetermined region has been set for each of pixels in the image P. The thus calculated index value K is taken as the index value K corresponding to each of the pixels in the image P. Also, the abnormal pattern candidate detecting means 310 calculates the likelihood ratio Y of the Mahalanobis distance, which likelihood ratio acts as an index value, from the index value K. The thus calculated likelihood ratio Y is taken as the likelihood ratio Y corresponding to eachof the pixels in the image P. The abnormal pattern candidate detecting means 310 stores the information representing the calculated likelihood ratios Y, Y, ... Also, the abnormal pattern candidate detecting means 310 feeds the information, which represents the position of the extracted abnormal pattern candidate P1, into the image output means 330 .

The malignancy certainty degree calculating means 320 reads the information representing the likelihood ratio Y of the Mahalanobis distance, which likelihood ratio corresponds to each of the pixels in the image P, from the abnormal pattern candidate detecting means 310. Also, the malignancy certainty degree calculating means 320 calculates the degree of certainty about malignancy D with respect to each of the predetermined regions in the image P

in accordance with the likelihood ratio Y of the Mahalanobis distance, which likelihood ratio corresponds to each of the pixels in the image P, and in accordance with the correlation between the likelihood ratio Y and the possibility of a pattern being a malignant pattern, which correlation has been obtained from the clinical results. The thus calculated degree of certainty about malignancy D with respect to each predetermined region in the image P is taken as the degree of certainty about malignancy D corresponding to each of the pixels in the image P, which each pixel corresponds to the predetermined region.

The distribution image signal formingmeans 325 forms the distribution image signal PD, which corresponds to the image P andrepresents the distribution image PD reflecting the degrees of certainty about malignancy, in accordance with the degrees ofcertaintyaboutmalignancyD, D, ..., eachofwhichcorresponds to one of the pixels in the image P. The distribution image signal forming means 325 feeds the thus formed distribution image signal PD into the image output means 330.

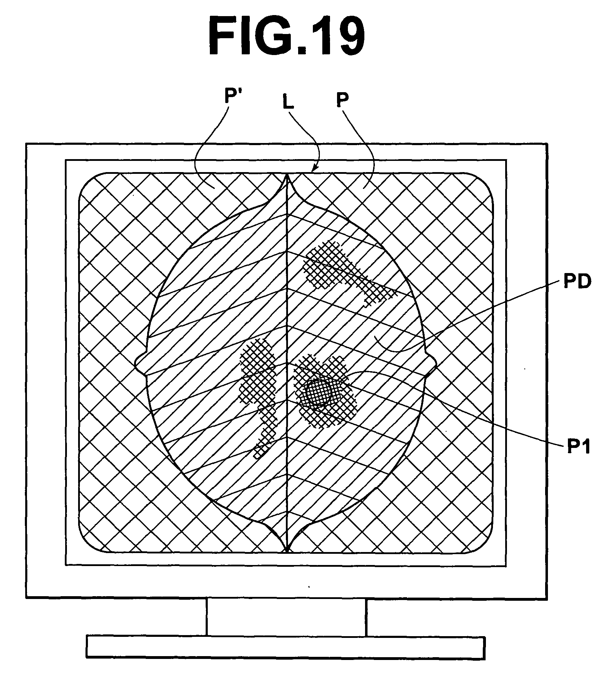

As illustrated in Figure 19, in accordance with the received image signal P, the received information representing the position of the detected abnormal pattern candidate P1, and the received distribution image signal PD representing the distribution image PD reflecting the degrees of certainty about malignancy, the image output means 330 displays the arrow mark, which indicates the abnormal pattern candidate P1 in the image P, on the display screen. Also, the image output means 330 displays the distribution image PD, which corresponds to the image P and reflects the degrees of certainty about malignancy. The distribution image PD may be displayed by being superposed upon the image P and, for example, in a semi-transparent form. Alternatively, the image P and the distribution image PD may be displayed alternately on the display screen.

As described above, with the abnormal pattern candidate detection processing system 300, which is the third embodiment of the abnormal pattern candidate detection processing system in accordance with the present invention, the image output means 330 outputs and displays the image P and the information for specifying the detected abnormal pattern candidate P1. Also, the image output means 330 displays the distribution image PD, which corresponds to the image P and reflectsthe degreesofcertainty about malignancy. Therefore, the state of distribution of the degrees of certainty about malignancy with respect to the entire pattern of the image P is capable of being found. Accordingly, the width of the approach to diagnosis becomes broad, and the capability of the outputted image serving as an effective tool in, particularly, the efficient and accurate diagnosis of an illness is capable of being enhanced even further.

The aforesaid first embodiment of the abnormal pattern candidate detection processing system in accordance with the present invention may be modified such that the information representing the degree of certainty about malignancy D is displayed only when an instruction for the displaying of the information representing the degree of certainty about malignancy D is given by the operator from a mouse device, or the like. With the modification described above, the viewing of the image area corresponding to theposition for the displaying of the degree of certainty about malignancy D is not obstructed, and the degree of certainty about malignancy D is capable of being confirmed when necessary.

The aforesaid first and second embodiments of the abnormal pattern candidate detection processing system in accordance with the present invention may be modified such that, as a different kind of the information representing the degree of certainty about malignancy D, a warning message, which is altered in accordance with the degree of certainty about malignancy D, may be displayed. For example, in cases where the degree of certainty about malignancy D is comparatively high, a warning message representing "HIGH MALIGNANCY" may be displayed at a position in the vicinity of the abnormal pattern candidate P1. Alternatively, in such cases, a warning message representing "THERE IS A HIGHLY MALIGNANT PATTERN" may be displayed at a position spaced from the abnormal pattern candidate P1. In cases where the degree of certainty about malignancy D is comparatively low, a message representing "LOW MALIGNANCY" may be displayed at a position in the vicinity of the abnormal pattern candidate P1. Alternatively, in such cases, a message representing "THERE IS NOTAHIGHLYMALIGNANT PATTERN" may be displayed at a position spaced from the abnormal pattern candidate P1.

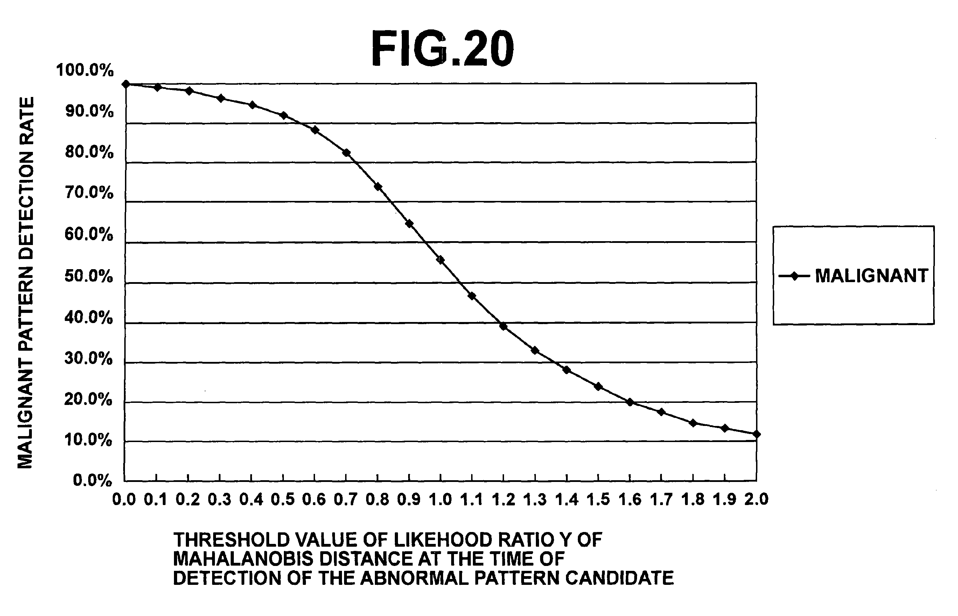

Also, as illustrated in Figure 20, as the correlation between the index value and the possibility of a pattern being a malignant pattern, which correlation has been obtained from the clinical results, the relationship between the likelihood ratio Y of the Mahalanobis distance and the malignant pattern detection rate (i.e., the proportion of the number of the malignant patterns, which are capable of being detected with the value of the likelihood ratio Y being taken as a threshold value, with respect to the total number of the malignant patterns) may be employed. In such cases, the degree of certainty about malignancy may be calculated with the formula shown below.

Degree of certainty about malignancy

= 100 (%) - (proportion of number of

malignant patterns associated with

likelihood ratio)

Further, the image inputted into the abnormal pattern candidate detection processing system is not limited to the mammogram and may be one of various images, such as a stomach X-ray image, which are to be subj ected to the detection of the abnormal pattern candidate.

**Claims**

1. An abnormal pattern candidate detection processing method, comprising the steps of:

i) detecting an abnormal pattern candidate, which is embedded in a medical image, in accordance with a medical image signal representing a medical image, and
ii) outputting at least information for specifying the detected abnormal pattern candidate,

wherein the method further comprises the step of calculating a degree of certainty about malignancy, which degree represents a level of possibility of a pattern being a malignant pattern, with respect to the abnormal pattern candidate, the calculation being made in accordance with an index value representing a feature of the abnormal pattern candidate and in accordance with a correlation between the index value and possibility of a pattern being a malignant pattern, which correlation has been obtained from clinical results, and
the step of outputting at least the information for specifying the detected abnormal pattern candidate is a step of outputting information representing the degree of certainty about malignancy with respect to the abnormal pattern candidate together with the information for specifying the detected abnormal pattern candidate.

2. A method as defined in Claim 1 wherein the index value is an index value utilized for the detection of the abnormal pattern candidate.

3. A method as defined in Claim 1 or 2 wherein the information for specifying the detected abnormal pattern candidate and the information representing the degree of certainty about malignancy with respect to the abnormal pattern candidate are a mark, which is displayed at a position for the indication of the abnormal pattern candidate on the medical image, such that the kind of the mark may be altered in accordance with the degree of certainty about malignancy.

4. An abnormal pattern candidate detection processing system, comprising:

i) abnormal pattern candidate detecting means for detecting an abnormal pattern candidate, which is embedded in a medical image, in accordance with a medical image signal representing a medical image, and
ii) image output means for outputting at least information for specifying the detected abnormal pattern candidate,

wherein the system further comprises malignancy certainty degree calculating means for calculating a degree of certainty about malignancy, which degree represents a level of possibility of a pattern being a malignant pattern, with respect to the abnormal pattern candidate, the calculation being made in accordance with an index value representing a feature of the abnormal pattern candidate and in accordance with a correlation between the index value and possibility of a pattern being a malignant pattern, which correlation has been obtained from clinical results, and
the image output means outputs information representing the degree of certainty about malignancy with respect to the abnormal pattern candidate together with the information for specifying the detected abnormal pattern candidate.

5. A system as defined in Claim 4 wherein the index value is an index value utilized for the detection of the abnormal pattern candidate.

6. A system as defined in Claim 4 or 5 wherein the information for specifying the detected abnormal pattern candidate and the information representing the degree of certainty about malignancy with respect to the abnormal pattern candidate are a mark, which is displayed at a position for the indication of the abnormal pattern candidate on the medical image, such that the kind of the mark may be altered in accordance with the degree of certainty about malignancy.

7. An abnormal pattern candidate detection processing method, comprising the steps of:

i) detecting an abnormal pattern candidate, which is embedded in a medical image, in accordance with a medical image signal representing a medical image, and
ii) outputting at least information for specifying the detected abnormal pattern candidate,

wherein the method further comprises the steps of:

a) selecting an arbitrary region in the medical image, and
b) calculating a degree of certainty about malignancy, which degree represents a level of possibility of a pattern being a malignant pattern, with respect to a pattern embedded in the selected region, the calculation being made in accordance with an index value representing a feature of the pattern embedded in the selected region and in accordance with a correlation between the index value and possibility of a pattern being a malignant pattern, which correlation has been obtained from clinical results, and

the step of outputting at least the information for specifying the detected abnormal pattern candidate is a step of further outputting information representing the degree of certainty about malignancy with respect to the pattern embedded in the selected region.

8. A method as defined in Claim 1, 2, 3, or 7 wherein the information representing the degree of certainty about malignancy is a numerical value.

9. A method as defined in Claim 1, 2, 3, or 7 wherein the information representing the degree of certainty about malignancy is a warning message, which is altered in accordance with the degree of certainty about malignancy.

10. An abnormal pattern candidate detection processing system, comprising:

i) abnormal pattern candidate detecting means for detecting an abnormal pattern candidate, which is embedded in a medical image, in accordance with a medical image signal representing a medical image, and
ii) image output means for outputting at least information for specifying the detected abnormal pattern candidate,

wherein the system further comprises:

a) region selecting means for selecting an arbitrary region in the medical image, and
b) malignancy certainty degree calculating means for calculating a degree of certainty about malignancy, which degree represents a level of possibility of a pattern being a malignant pattern, with respect to a pattern embedded in the selected region, the calculation being made in accordance with an index value representing a feature of the pattern embedded in the selected region and in accordance with a correlation between the index value and possibility of a pattern being a malignant pattern, which correlation has been obtained from clinical results, and

the image output means further outputs information representing the degree of certainty about malignancy with respect to the pattern embedded in the selected region.

11. A system as defined in Claim 4, 5, 6, or 10 wherein the information representing the degree of certainty about malignancy is a numerical value.

12. A system as defined in Claim 4, 5, 6, or 10 wherein the information representing the degree of certainty about malignancy is a warning message, which is altered in accordance with the degree of certainty about malignancy.

13. An abnormal pattern candidate detection processing method, comprising the steps of:

i) detecting an abnormal pattern candidate, which is embedded in a medical image, in accordance with a medical image signal representing a medical image, and
ii) outputting at least information for specifying the detected abnormal pattern candidate,

wherein the method further comprises the steps of:

a) calculating a degree of certainty about malignancy, which degree represents a level of possibility of a pattern being a malignant pattern, with respect to a predetermined region in the medical image, which predetermined region has been set for each of pixels in the medical image, as the degree of certainty about malignancy corresponding to each of the pixels in the medical image, the calculation being made in accordance with an index value representing a feature of a pattern embedded in the predetermined region and in accordance with a correlation between the index value and possibility of a pattern being a malignant pattern, which correlation has been obtained from clinical results, and

b) forming a distribution image signal representing a distribution image, which represents a distribution of the degrees of certainty about malignancy in themedical image, in accordance with the thus calculated degrees of certaintyaboutmalignancy, eachof whichdegrees corresponds to one of the pixels, and

the step of outputting at least the information for specifying the detected abnormal pattern candidate is a step of further outputting the distribution image in accordance with the thus formed distribution image signal.

**14.** A method as defined in Claim 1, 2, 3, 7, 8, 9, or 13 wherein the medical image is a mammogram.

**15.** An abnormal pattern candidate detection processing system, comprising:

i) abnormal pattern candidate detecting means for detecting an abnormal pattern candidate, which is embedded in a medical image, in accordance with a medical image signal representing a medical image, and
ii) image output means for outputting at least information for specifying the detected abnormal pattern candidate,

wherein the system further comprises:

a) malignancy certainty degree calculating means for calculating a degree of certainty about malignancy, which degree represents a level of possibility of a pattern beingamalignantpattern, with respect to apredetermined region in the medical image, which predetermined region has been set for each of pixels in the medical image, as the degree of certainty about malignancy corresponding to each of the pixels in the medical image, the calculation being made in accordance with an index value representing a feature of a pattern embedded in the predetermined region and in accordance with a correlation between the index value and possibility of a pattern being a malignant pattern, which correlation has been obtained from clinical results, and

b) distributionimagesignalforming meansfor forming a distribution image signal representing a distribution image, which represents a distribution of the degrees of certainty about malignancy in the medical image, in accordance with the thus calculated degrees of certainty about malignancy, each of which degrees corresponds to one of the pixels, and

the image output means further outputs the distribution image in accordance with the distribution image signal, which has been formed by the distribution image signal forming means.

**16.** A system as defined in Claim 4, 5, 6, 10, 11, 12, or 15 wherein the medical image is a mammogram.

# FIG.1

100

P → **ABNORMAL PATTERN CANDIDATE DETECTING MEANS** `10`

P → **IMAGE OUTPUT MEANS** `30`

P1,Y → **MALIGNANCY CERTAINTY DEGREE CALCULATING MEANS** `20` → P1,D

# FIG.2A

# FIG.2B

GRADIENT VECTOR

# FIG.2C

GRADIENT VECTOR

# FIG.2D

GRADIENT VECTOR

# FIG.3

| f₇ | f₆ | f₅ | f₄ | f₃ |
|----|----|----|----|----|
| f₈ |    |    |    | f₂ |
| f₉ |    | PIXEL j |  | f₁ |
| f₁₀ |   |    |    | f₁₆ |
| f₁₁ | f₁₂ | f₁₃ | f₁₄ | f₁₅ |

# FIG.4

PIXEL OF
INTEREST (k,l)

GRADIENT VECTOR

R

Θj

j

RADIAL LINE

# FIG.5

PIXEL(x,y) LOCATED ALONG
THE RADIAL LINE
EXTENDING FROM
THE PIXEL OF INTEREST

PIXEL OF
INTEREST (k,l)

# FIG.6A

AFTER DILATION PROCESSING

●─• MASK SIZE

f(x)

BEFORE DILATION PROCESSING

x

# FIG.6B

AFTER EROTION PROCESSING

●─• MASK SIZE

f(x)

BEFORE EROTION PROCESSING

x

# FIG.6C

CONVEX SIGNALCHANGE AREA SMALLER THAN THE MASK SIZE

●─• MASK SIZE

BEFORE OPENING PROCESSING

f(x)

AFTER OPENING PROCESSING

x

# FIG.6D

AFTER CLOSING PROCESSING

●─• MASK SIZE

f(x)

CONCAVE SIGNAL CHANGE AREA SMALLER THAN THE MASK SIZE

BEFORE CLOSING PROCESSING

x

**FIG.7**

B₄ B₃ B₂

B₁

**FIG.8**

$P_J, P_M$

AQ

R

**FIG.9**

B₆

B₅ B₂

PIXEL OF
INTEREST 2

PIXEL OF
INTEREST 3

B₃ B₁

PIXEL OF
INTEREST 1

B₄

B₇ $P_J, P_M$

B

# FIG.10

COUNT

P_J, P_M

B

# FIG.11

AQ

PJ,PM

j

i

# FIG.12

| i \ j | 0 | 1 | 2 | 3 | 4 | 5 | 6 | 7 | 8 | 9 | 10 |
|---|---|---|---|---|---|---|---|---|---|---|---|
| 0 | 1 | | | | | | | | | | |
| 1 | | 1 | | | | | | | | | |
| 2 | | | | | | | | | | | |
| 3 | | | | | | | | | | | |
| 4 | | | | | | | | | | | |
| 5 | | | | 2 | | | | | | | |
| 6 | | | | | | | | | | | |
| 7 | | | | | | | | | | | |
| 8 | | | | | | | | | | | |
| 9 | | | | | | | | | | | |
| 10 | | | | | | | | | | | |

# FIG.13

LIKELIHOOD RATIO = 2

MALIGNANT PATTERN

(Dm1)

NORMAL PATTERN

(Dm2)

# FIG.14

# FIG.15

# FIG.16

200

P → **ABNORMAL PATTERN CANDIDATE DETECTING MEANS** (210)

P,P1 → **IMAGE OUTPUT MEANS** (230)

Y → **MALIGNANCY CERTAINTY DEGREE CALCULATING MEANS** (220)

P3,D

P3 → **REGION SELECTING MEANS** (215)

EP 1 418 521 A1

# FIG.17

# FIG.18

300

310

P → **ABNORMAL PATTERN CANDIDATE DETECTING MEANS**

P,P1 → **IMAGE OUTPUT MEANS** 330

Y

**MALIGNANCY CERTAINTY DEGREE CALCULATING MEANS** 320

D → **DISTRIBUTION IMAGE SIGNAL FORMING MEANS** 325

PD

EP 1 418 521 A1

# FIG.19

# FIG.20

MALIGNANT

MALIGNANT PATTERN DETECTION RATE

100.0% 90.0% 80.0% 70.0% 60.0% 50.0% 40.0% 30.0% 20.0% 10.0% 0.0%

0.0 0.1 0.2 0.3 0.4 0.5 0.6 0.7 0.8 0.9 1.0 1.1 1.2 1.3 1.4 1.5 1.6 1.7 1.8 1.9 2.0

THRESHOLD VALUE OF LIKEHOOD RATIO Y OF
MAHALANOBIS DISTANCE AT THE TIME OF
DETECTION OF THE ABNORMAL PATTERN CANDIDATE

# FIG.21

EP 1 418 521 A1

**European Patent Office**

**EUROPEAN SEARCH REPORT**

Application Number

EP 03 02 3267

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/019623 A1 (TAKEO HIDEYA) 6 September 2001 (2001-09-06) * abstract; figures 1,2A,2B * * paragraph [0004] - paragraph [0069] * | 1-20 | G06F19/00 |
| X | US 5 982 917 A (CLARKE LAURENCE P ET AL) 9 November 1999 (1999-11-09) * abstract * * column 1, line 23 - column 5, line 42 * | 1-20 | |
| A | US 5 784 482 A (NAKAJIMA NOBUYOSHI) 21 July 1998 (1998-07-21) * abstract; figures 5,10 * * column 1, line 10 - column 5, line 44 * | 1-20 | |
| A | US 5 850 465 A (SHIMURA KAZUO ET AL) 15 December 1998 (1998-12-15) * abstract; figures 1,14,15 * * column 1, line 39 - column 29, line 40 * | 1-20 | |
| A | HIRAKO K ET AL: "DEVELOPMENT OF DETECTION FILTER FOR MICROCALCIFICATIONS ON MAMMOGRAMS: A METHOD BASED ON DENSITY GRADIENT AND TRIPLE-RING FILTER ANALYSIS" SYSTEMS & COMPUTERS IN JAPAN, SCRIPTA TECHNICA JOURNALS. NEW YORK, US, vol. 27, no. 13, 30 November 1996 (1996-11-30), pages 36-48, XP000685976 ISSN: 0882-1666 * the whole document * | 1-20 | TECHNICAL FIELDS SEARCHED (Int.Cl.7) G06F |

The present search report has been drawn up for all claims

| Place of search | Date of completion of the search | Examiner |
|---|---|---|
| Munich | 3 February 2004 | Herter, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

44

**EP 1 418 521 A1**

**ANNEX TO THE EUROPEAN SEARCH REPORT
ON EUROPEAN PATENT APPLICATION NO.**

EP 03 02 3267

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2004

| Patent document cited in search report | | Publication date | Patent family member(s) | | Publication date |
|---|---|---|---|---|---|
| US 2001019623 | A1 | 06-09-2001 | JP | 2001299740 A | 30-10-2001 |
| US 5982917 | A | 09-11-1999 | US | 5799100 A | 25-08-1998 |
| US 5784482 | A | 21-07-1998 | JP | 8263641 A | 11-10-1996 |
| US 5850465 | A | 15-12-1998 | JP | 2987633 B2 | 06-12-1999 |
| | | | JP | 3027479 A | 05-02-1991 |
| | | | JP | 2987634 B2 | 06-12-1999 |
| | | | JP | 3027485 A | 05-02-1991 |
| | | | JP | 3027484 A | 05-02-1991 |
| | | | JP | 3026237 A | 04-02-1991 |
| | | | JP | 2867036 B2 | 08-03-1999 |
| | | | JP | 3027480 A | 05-02-1991 |
| | | | JP | 3092969 A | 18-04-1991 |
| | | | DE | 69033381 D1 | 05-01-2000 |
| | | | DE | 69033381 T2 | 13-04-2000 |
| | | | DE | 69033383 D1 | 05-01-2000 |
| | | | DE | 69033383 T2 | 13-04-2000 |
| | | | DE | 69033394 D1 | 20-01-2000 |
| | | | DE | 69033394 T2 | 11-05-2000 |
| | | | EP | 0405456 A2 | 02-01-1991 |
| | | | EP | 0707277 A2 | 17-04-1996 |
| | | | EP | 0707278 A2 | 17-04-1996 |
| | | | JP | 3102477 A | 26-04-1991 |
| | | | JP | 2582660 B2 | 19-02-1997 |
| | | | JP | 3277349 A | 09-12-1991 |